# EUROPEAN PATENT APPLICATION

(11) **EP 2 565 968 A1**
(43) Date of publication of application: **06.03.2013**
(21) Application number: 12005996.9
(22) Date of filing: 22.08.2012
(51) Int. Cl.: H01M 4/58, H01M 10/0525, H01M 4/36

(54) **ACTIVE MATERIAL, ELECTRODE, SECONDARY BATTERY, BATTERY PACK, ELECTRIC VEHICLE, ELECTRIC ENERGY STORAGE SYSTEM, ELECTRIC POWER TOOL, AND ELECTRONIC UNIT**

(30) Priority: 29.08.2011 JP 2011186116
(71) Applicant: Sony Corporation, Tokyo 108-0075 (JP)
(72) Inventor: Hosoya, Yosuke, Koriyama-shi Fukushima (JP); Li, Guohua, Koriyama-shi Fukushima (JP); Fujiki, Satoshi, Koriyama-shi Fukushima (JP)
(74) Representative: Müller - Hoffmann & Partner

(57) **Abstract**

A secondary battery includes: a cathode; an anode; and an electrolytic solution. The cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

## Description

### BACKGROUND

The present technology relates to an active material including lithium and one or two or more transition metals as constituent elements, an electrode and a secondary battery each using the active material, a battery pack, an electric vehicle, an electric energy storage system, an electric power tool, and an electronic unit each using the secondary battery.

In recent years, various electronic units such as cellular phones and personal digital assistants (PDAs) have been widely used, and further size and weight reduction and longer life of the electronic units are strongly desired. Accordingly, as power supplies for the electronic units, batteries, in particular, small and lightweight secondary batteries capable of obtaining high energy density have been developed. Recently, in addition to the above-described electronic units, other various applications of the secondary batteries have been studied. The applications include battery packs removably mounted in electronic units or the like, electric vehicles such as electric cars, electric energy storage systems such as home energy servers, and electric drills.

Secondary batteries using various charge-discharge principles have been widely proposed, and in particular, secondary batteries using insertion and extraction of an electrode reactant hold great promise, since the secondary batteries obtain higher energy density than lead-acid batteries or nickel-cadmium batteries.

The secondary battery includes a cathode, an anode, and an electrolytic solution, and the cathode includes a cathode active material capable of inserting and extracting an electrode reactant. As a typical cathode active material, lithium transition metal complex oxides with a bedded salt crystal structure (such as LiCoO₂ and LiNiO₂) are used; however, stability or the like of a charge state is a concern. Therefore, as electrochemically stable cathode active materials, lithium transition metal complex phosphates with an olivine crystal structure (such as LiFePO₄ are also used (for example, refer to Japanese Unexamined Patent Application Publication No. H09-134725).

However, the lithium transition metal complex phosphates have a lower discharge potential than the lithium transition metal complex oxides, thereby having lower energy density. Therefore, it is difficult to obtain sufficient battery capacity when secondary batteries using the lithium transition metal complex phosphates are used in high-voltage applications. Thus, compositions or the like of cathode active materials have been variously studied.

First, an improvement in compositions or the like of lithium transition metal complex phosphates has been studied. More specifically, a part of Fe in LiFePO₄ is substituted with Mn to increase the discharge potential (for example, refer to J. Electrochem.Soc, 144, 1188 (1997)). Conductive microparticles satisfying a predetermined oxidation-reduction potential condition are supported on lithium iron phosphate-based material particles to improve charge-discharge capacity during large-current charge and discharge (for example, refer to Japanese Unexamined Patent Application Publication No. 2001-110414). Olivine lithium iron complex oxide particles (of which the basic composition is LiFePO₄ have an average particle diameter of 1 µm or less to maintain active-material discharge capacity even after a cycle (for example, refer to Japanese Unexamined Patent Application Publication No. 2009-087946). Carbon conductive paths are built in olivine lithium phosphate particles to improve high-rate discharge characteristics (for example, refer to Japanese Unexamined Patent Application Publication No. 2003-203628). An olivine lithium iron phosphate compound including Ti as a constituent element is used to obtain good battery characteristics for high-speed charge and discharge (for example, refer to Japanese Unexamined Patent Application Publication No. 2009-029670).

Moreover, mixing of two kinds of cathode active materials has been studied. More specifically, two kinds of lithium transition metal complex oxides with a bedded salt crystal structure are mixed to obtain sufficient discharge capacity even during large-current discharge (for example, refer to Japanese Unexamined Patent Application Publication Nos. 2003-173776, 2004-022239, 2004-031165, and 2004-134207). In this case, two kinds of lithium transition metal complex oxides having different particle diameters (D50) are used to obtain good cycle characteristics (for example, refer to Japanese Unexamined Patent Application Publication No. 2007-335318). A lithium transition metal complex oxide (such as LiCoO₂) with a bedded salt crystal structure and a lithium transition metal complex phosphate (such as LiFePO₄) with an olivine crystal structure are mixed to obtain good high-rate discharge characteristics even after repeating a charge-discharge cycle (for example, refer to Japanese Unexamined Patent Application Publication Nos. 2008-034218 and 2007-335245). A lithium transition metal complex oxide (such as LiMn₂O₄ with a spinel crystal structure and a lithium transition metal complex phosphate (such as LiFePO₄) with an olivine crystal structure are mixed to improve cycle characteristics and high-temperature characteristics (for example, refer to Japanese Unexamined Patent Application Publication No. 2006-278256).

### SUMMARY

In recent years, as electronic units and the like including secondary batteries have higher performance and more functions, secondary batteries tend to be frequently charged and discharged with an increase in power consumption of the electronic units and the like. Therefore, a further improvement in battery characteristics is desired. However, in secondary batteries in related art, sufficient battery characteristics are not yet obtained.

It is desirable to provide an active material, an electrode, a secondary battery, a battery pack, an electric vehicle, an electric energy storage system, an electric power tool, and an electronic unit which each are capable of obtaining good battery characteristics.

According to an embodiment of the technology, there is provided an active material including two or more kinds of lithium transition metal complex phosphate particles which include lithium and one or two or more transition metals as constituent elements, in which the composition of the one or two or more transition metals differs between the two or more kinds of lithium transition metal complex phosphate particles.

According to an embodiment of the technology, there is provided an electrode including two or more kinds of lithium transition metal complex phosphate particles which include lithium and one or two or more transition metals as constituent elements, in which the composition of the one or two or more transition metals differs between the two or more kinds of lithium transition metal complex phosphate particles.

According to an embodiment of the technology, there is provided a secondary battery including: a cathode; an anode; and an electrolytic solution, in which the cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

According to an embodiment of the technology, there is provided a battery pack including: a secondary battery; a control section controlling a usage state of the secondary battery; and a switch section switching the usage state of the secondary battery according to an instruction from the control section, in which the secondary battery includes a cathode, an anode, and an electrolytic solution, the cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

According to an embodiment of the technology, there is provided an electric vehicle including: a secondary battery; a conversion section converting electric power supplied from the secondary battery into driving force; a drive section operating according to the driving force; and a control section controlling a usage state of the secondary battery, in which the secondary battery includes a cathode, an anode, and an electrolytic solution, the cathode includes two or more kinds of lithium transition metal complex phosphate particles including lithium and the composition of the one or two or more transition metals differs between the two or more kinds of lithium transition metal complex phosphate particles.

According to an embodiment of the technology, there is provided an electric energy storage system including: a secondary battery; one or two or more electrical units; and a control section controlling electric power supply from the secondary battery to the electrical unit, in which the secondary battery includes a cathode, an anode, and an electrolytic solution, the cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

According to an embodiment of the technology, there is provided an electric power tool including: a secondary battery; and a movable section receiving electric power from the secondary battery, in which the secondary battery includes a cathode, an anode, and an electrolytic solution, the cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

According to an embodiment of the technology, there is provided an electronic unit receiving electric power from a secondary battery, the secondary battery including: a cathode; an anode; and an electrolytic solution, in which the cathode includes two or more kinds of lithium transition metal complex phosphate particles including lithium and one or two or more transition metals as constituent elements, and the composition of the one or two or more transition metals differs between the two or more kinds of lithium transition metal complex phosphate particles.

The meaning of "the composition of the one or two or more transition metals differs" is that, as described above, the kind of transition metal or the atomic ratio of transition metals differs between compared lithium transition metal complex phosphate particles. The meaning of "the kind of transition metal differs" is that the kind of transition metal or a combination of transition metals is not common, and includes not only the case where the kind of transition metal is not common, such as the case where one kind of lithium transition metal complex phosphate particles includes Fe and the other kind includes V, but also the case where a common kind of transition metal is included in part, such as the case where one kind of lithium transition metal complex phosphate particles includes Fe and the other kind includes FeMn. On the other hand, the meaning of "the atomic ratio of transition metals differs" is that a common kind of a combination of transition metals is included, but the atomic ratio of the transition metals differs, such as the case where one kind of lithium transition metal complex phosphate particles includes Fe_{0.9}Mn_{0.1}) and the other kind includes Fe_{0.75}Mn_{0.25}.

In the active material, the electrode, or the secondary battery according to the embodiment of the technology, the active material includes two or more kinds of lithium transition metal complex phosphate particles including one or two or more transition metals of which the composition differs between the two or more kinds of lithium transition metal complex phosphate particles; therefore, good battery characteristics are obtained. Moreover, the battery pack, the electric vehicle, the electric energy storage system, the electric power tool, and the electronic units which each use the secondary battery according to the embodiment of the technology obtain a similar effect.

It is to be understood that both the foregoing general description and the following detailed description are exemplary, and are intended to provide further explanation of the technology as claimed.

### BRIEF DESCRIPTION OF THE DRAWINGS

The accompanying drawings are included to provide a further understanding of the disclosure, and are incorporated in and constitute a part of this specification. The drawings illustrate embodiments and, together with the specification, serve to explain the principles of the technology.

FIG. 1 is a sectional view illustrating a configuration of a secondary battery (cylindrical type) according to an embodiment of the technology.

FIG. 2 is an enlarged sectional view illustrating a part of a spirally wound electrode body illustrated in FIG. 1.

FIG. 3 is a perspective view illustrating a configuration of another secondary battery (laminate film type) according to the embodiment of the technology.

FIG. 4 is a sectional view taken along a line IV-IV of a spirally wound electrode body illustrated in FIG. 3.

FIG. 5 is a block diagram illustrating a configuration of an application example (battery pack) of the secondary battery.

FIG. 6 is a block diagram illustrating a configuration of an application example (electric vehicle) of the secondary battery.

FIG. 7 is a block diagram illustrating a configuration of an application example (electric energy storage system) of the secondary battery.

FIG. 8 is a block diagram illustrating a configuration of an application example (electric power tool) of the secondary battery.

### DETAILED DESCRIPTION OF THE PREFERRED EMBODIMENTS

A preferred embodiment of the technology will be described in detail below referring to the accompanying drawings. It is to be noted that description will be given in the following order.
1. Active Material
2. Electrode and Secondary Battery
   2-1. Cylindrical type
   2-2. Laminate film type
3. Applications of Secondary Battery
   3-1. Battery pack
   3-2. Electric vehicle
   3-3. Electric energy storage system
   3-4. Electric power tool

### (1. Active Material)

First, a structure of an active material according to an embodiment of the technology will be described below.

The active material described here is used, for example, as an electrode material (a cathode material) for a cathode. The application of the active material is not specifically limited, but the active material is applied to, for example, an electrochemical device such as a secondary battery or a capacitor.

### [Composition of active material]

The active material includes two or more kinds of lithium transition metal complex phosphate particles including lithium (Li) and one or two or more transition metals as constituent elements. However, the composition of the one or two or more transition metals differs between the two or more kinds of lithium transition metal complex phosphate particles. Hereinafter, two or more kinds of lithium transition metal complex phosphate particles including a transition metal with a composition differing between the two or more kinds of lithium transition metal complex phosphate particles are referred to as "different-composition complex phosphate particles".

A "lithium transition metal complex phosphate" is a phosphate including Li and one or two or more transition metal elements as constituent elements, and the lithium transition metal complex phosphate is represented by the following formula (3) as a general expression. The lithium transition metal complex phosphate preferably has an olivine crystal structure. The kind of M in the formula (3) is not specifically limited, as long as M is one kind or two or more kinds selected from Group 3 to 11 transition metals in the long form of the periodic table of the elements. Examples of M include Fe, Mn, Ni, Co, Mg, Ti, Al, Zn, Cu, V, Zr, Mo, Nb, and a combination of two or more kinds selected from them.

LiₓM_{y}(PO₄)_{z} (3)

where M is one or two or more transition metal elements, and x, y, and z each takes an arbitrary value.

The meaning of "the composition of one or two or more transition metals differs" is that, as described above, the kind of transition metal or the atomic ratio of transition metals differs between compared lithium transition metal complex phosphate particles. The meaning of "the kind of transition metal differs" is that the kind of transition metal or a combination of transition metals is not common, and includes not only the case where the kind of transition metal is not common, such as the case where one kind of lithium transition metal complex phosphate particles includes Fe and the other kind includes V, but also the case where a common kind of transition metal is included in part, such as the case where one kind of lithium transition metal complex phosphate particles includes Fe and the other kind includes FeMn. On the other hand, the meaning of "the atomic ratio of transition metals differs" is that a common kind of a combination of transition metals is included, but the atomic ratio of the transition metals differs, such as the case where one kind of lithium transition metal complex phosphate particles includes Fe_{0.9}Mn_{0.1} and the other kind includes Fe_{0.75}Mn_{0.25}.

The active material includes two or more kinds of different-composition complex phosphate particles, since electrical resistance is specifically reduced, and the active material contributes to an improvement in performance of the electrochemical device using the active material.

More specifically, when the active material includes two or more kinds of different-composition complex phosphate particles, the electrical resistance of the whole active material is reduced by a synergistic interaction between the particles, since it is considered that, when two or more kinds of different-composition complex phosphate particles with different charge-discharge potentials caused by different transition metal compositions coexist in the active material, an electrode reactant is easily exchanged between the particles, thereby accelerating the diffusion rate of the electrode reactant. The electrode reactant is lithium (lithium ions) in the case where the electrochemical device is a lithium-ion secondary battery.

This advantageous tendency is more pronounced specifically when the different-composition complex phosphate particles have a common skeleton (an olivine crystal structure) including phosphate ions as constituent ions. Thus, the tendency to remarkably reduce electrical resistance of the active material is not obtained in the case where two or more kinds of lithium transition metal complex oxide particles are used or in the case where lithium transition metal complex oxide particles and lithium transition metal complex phosphate particles are used. In other words, this tendency is a special advantage which is obtained only in the case where two or more kinds of different-composition complex phosphate particles are used.

It is to be noted that examples of the "lithium transition metal complex oxide particles" include LiCoO₂ and LiNiO₂ with a bedded salt crystal structure, and LiMn₂O₄ with a spinel crystal structure. Moreover, examples of the "lithium transition metal complex phosphate particles" include LiFePO₄ with an olivine crystal structure.

The different-composition complex phosphate particles described here are so-called primary particles. However, in the case where the different-composition complex phosphate particles are used for the electrochemical device, the different-composition complex phosphate particles may be used in a state of primary particles, in a state of aggregates (secondary particles) of two or more particles, or a state of a mixture of primary particles and aggregates.

In particular, the different-composition complex phosphate particles preferably include secondary particles, since compared to the case where the different-composition complex phosphate particles include only primary particles, the surface area of a high-reactive active material is reduced, thereby suppressing the occurrence of unintended side reaction in proximity to a surface of the active material. The "side reaction" is, for example, decomposition reaction of an electrolytic solution when the active material is used with the electrolytic solution in the electrochemical device.

In the case where different-composition complex phosphate particles are aggregated to form secondary particles, particles of a same kind (with a same transition metal composition) or particles of different kinds (with different transition metal compositions) may be aggregated, or aggregations of particles of the same kind and aggregations of particles of different kinds may coexist. In any of the cases, the surface area of the active material is reduced, thereby suppressing the occurrence of side reaction.

In the case where two or more kinds of different-composition complex phosphate particles are used for the electrochemical device, the two or more kinds of different-composition complex phosphate particles may be used in a state where a mixture of the two or more kind of different-composition complex phosphate particles is included in one layer, in a state where the two or more kinds of different-composition complex phosphate particles are separated into different layers, or in a combination of the above-described states, since the electrical resistance of the active material is reduced irrespective of the above-described difference in state when the active material includes two or more kinds of different-composition complex phosphate particles.

The state where "a mixture of the two or more kind of different-composition complex phosphate particles is included in one layer" here is, for example, a state where, in the case where the electrochemical device is a secondary battery, an electrode includes an active material layer, and the active material layer (configured of one layer) includes two or more kinds of different-composition complex phosphate particles. On the other hand, the state where "the two or more kinds of different-composition complex phosphate particles are separated into different layers" is, for example, a state where the above-described active material layer has a multilayer configuration, and the two or more kinds of different-composition complex phosphate particles are included in layers, respectively.

It is to be noted that the mixture ratio of the two or more kinds of different-composition complex phosphate particles is not specifically limited, and may be arbitrarily determined.

In particular, a coating layer including a carbon material is preferably provided on surfaces of one or more kinds of particles in the two or more kinds of different-composition complex phosphate particles, since the electrical resistance of the active material is further reduced.

In particular, the two or more kinds of different-composition complex phosphate particles preferably include iron-based particles represented by the following formula (1) and manganese-based particles represented by the following formula (2). While the iron-based particles mainly include Fe as a transition metal, the manganese particles mainly include Mn as a transition metal.

LiₐFe_{1-b}Ml_{b}(PO₄)_{c} (1)

Li_{d}mn₁₋ₑM2ₑ(PO₄)_{f} (2)

where M1 is one or more kinds selected from the group consisting of Mn, Ni, Co, Mg, Ti, Al, Zn, Cu, V, Zr, Mo, and Nb, a, b, and c satisfy 0≤a<2, 0≤b<0.8, and 0≤c<2, respectively, M2 is one or more kinds selected from the group consisting of Fe, Ni, Co, Mg, Ti, Al, Zn, Cu, V, Zr, Mo, and Nb, and d, e, and f satisfy 0≤d<2, 0≤e≤1, and 0≤f<2, respectively, and when M1 is Mn and M2 is Fe, (1-b)>b and (1-e)>e are established.

The two or more kinds of different-composition complex phosphate particles include iron-based particles and manganese-based particles, since the electrical resistance of the active material is easily reduced by a synergistic interaction between the iron-based particles and the manganese-based particles.

The iron-based particles include one kind or two or more kinds selected from the above-described group including Mn as transition metals in addition to Fe. The values of a, b, and c are not specifically limited, as long as the values are within the above-described ranges. However, as the value of b relating to the atomic ratio of Fe satisfies 0≤b<0.8, it is obvious that Fe is an essential constituent element in the iron-based particles.

Specific examples of the iron-based particles include LiFePO₄ LiFe_{1-b}Mn_{b}PO₄, LiFe_{1-b}Ni_{b}PO₄, LiFe_{1-b}Co_{b}PO₄, LiFe_{1-b}Mg_{b}PO₄, LiFe_{1-b}Ti_{b}PO₄, LiFe_{1-b}Al_{b}PO₄, LiFe_{1-b}Zn_{b}PO₄, LiFe_{1-b}Cu_{b}PO₄, LiFe_{1-b}V_{b}PO₄, LiFe_{1-b}Zr_{b}PO₄, LiFe_{1-b}MO_{b}PO₄, and LiFe_{1-b}Nb_{b}PO₄.

The manganese-based particles include one kind or two or more kinds selected from the above-described group including Fe as transition metals in addition to Mn. The values of d, e, and f are not specifically limited, as long as the values are within the above-described ranges. However, as the value of e relating to the atomic ratio of Mn satisfies 0≤e≤1, it is obvious that Mn may or may not be included.

Specific examples of the manganese-based particles include LiMn₁₋ₑFeₑPO₄, LiMn₁₋ₑNiₑPO₄, LiMn₁₋ₑCoₑPO₄, LiMn₁₋ₑMgₑPO₄, LiMn₁₋ₑTiₑPO₄, LiMn₁₋ₑAlₑPO₄, LiMn₁₋ₑZnₑPO₄, LiMn₁₋ₑ,CuₑPO₄, LiMn₁₋ₑVₑPO₄, LiMn₁₋ₑZrₑPO₄, LiMn₁₋ₑMoₑPO₄, LiMn₁₋ₑNbₑPO₄, LiMn₁₋ₑFeₑ₁Coₑ₂PO₄ (e1+e2=e), and Li3V(PO₄)₃.

However, the iron-based particles and the manganese-based particles have different compositions; therefore, as described above, in the case where M1 is Mn and M2 is Fe, (1-b)>b and (1-e)>e are satisfied. In other words, in the case where the iron-based particles and the manganese-based particles both include Fe and Mn as transition metals, the compositions (atomic ratio) of the iron-based particles and the manganese-based particles are determined to be Fe rich and Mn rich, respectively.

A magnitude relation of crystallite size (nm) obtained by X-ray diffraction between the iron-based particles and the manganese-based particles is not specifically limited; however, the crystallite size of the iron-based particles is preferably larger than the crystallite size of the manganese-based particles, since the electrode reactant is smoothly inserted into and extracted from the whole active material. The crystallite size is measured by, for example, an X-ray diffraction method.

The mixture ratio of the iron-based particles to the manganese-based particles is not specifically limited; however, the mixture ratio of the iron-based particles to the manganese-based particles is preferably within a range of 20:80 to 95:5 both inclusive in weight ratio, since the electrical resistance of the active material is further reduced.

### [Functions and effects of active material]

In the active material, two or more kinds of different-composition complex phosphate particles are included; therefore, as described above, the electrical resistance is remarkably reduced by the synergistic interaction between the two or more kinds of different-composition complex phosphate particles. Therefore, the active material contributes to an improvement in performance of the electrochemical device.

In particular, when particles of a same kind or particles of different kinds in the two or more kinds of different-composition complex phosphate particles are aggregated, or when a coating layer including a carbon material is provided on surfaces of one or more kinds of particles in the two or more kinds of different-composition complex phosphate particles, a higher effect is obtained.

Moreover, when the two or more kinds of different-composition complex phosphate particles include iron-based particles and the manganese-based particles, a higher effect is obtained. In this case, when the crystallite size of the iron-based particles obtained by X-ray diffraction is larger than that of the manganese-based particles, or when the mixture ratio (weight ratio) of the iron-based particles to the manganese-based particles is within a range of 20:80 to 95:5 both inclusive, a higher effect is obtained.

Next, an application example of the above-described active material according to the embodiment of the technology will be described below. For example, the case where the active material is used for a secondary battery as an example of the electrochemical device will be described below.

### (2. Electrode and Secondary Battery/2-1. Cylindrical type)

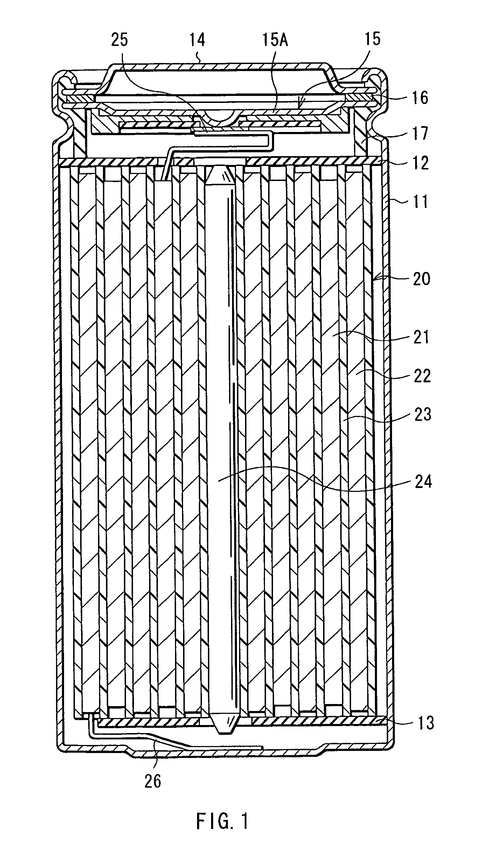

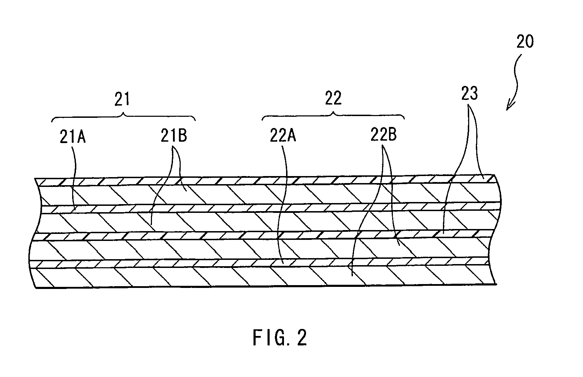

FIGs. 1 and 2 illustrate a sectional configuration of a secondary battery using an electrode according to an embodiment of the technology, and FIG. 2 is an enlarged view of a part of a spirally wound electrode body 20 illustrated in FIG. 1.

### [Entire configuration of secondary battery]

The secondary battery is, for example, a lithium-ion secondary battery (hereinafter simply referred to as "secondary battery") capable of obtaining battery capacity by insertion and extraction of lithium ions as an electrode reactant.

The secondary battery described here is a so-called cylindrical type secondary battery. In the secondary battery, a spirally wound electrode body 20 and a pair of insulating plates 12 and 13 are contained in a substantially hollow cylindrical-shaped battery can 11. The spirally wound electrode body 20 is formed, for example, by laminating a cathode 21 and an anode 22 with a separator 23 in between, and then spirally winding them.

The battery can 11 has a hollow configuration in which an end of the battery can 11 is closed and the other end thereof is opened, and the battery can 11 is made of, for example, Fe, Al, or an alloy thereof. It is to be noted that surfaces of the battery can 11 may be plated with Ni or the like. The pair of insulating plates 12 and 13 are disposed to allow the spirally wound electrode body 20 to be sandwiched therebetween at the top and the bottom of the spirally wound electrode body 20 and to extend in a direction perpendicular to a peripheral winding surface.

In the open end of the battery can 11, a battery cover 14, a safety valve mechanism 15, and a positive temperature coefficient (PTC) device 16 are caulked by a gasket 17, thereby hermetically sealing the battery can 11. The battery cover 14 is made of, for example, a material similar to that of the battery can 11. The safety valve mechanism 15 and the PTC device 16 are disposed inside the battery cover 14, and the safety valve mechanism 15 is electrically connected to the battery cover 14 through the PTC device 16. In the safety valve mechanism 15, when an internal pressure in the secondary battery increases to a certain extent or higher due to an internal short circuit or external application of heat, a disk plate 15A is flipped to disconnect the electrical connection between the battery cover 14 and the spirally wound electrode body 20. The PTC device 16 prevents abnormal heat generation caused by a large current. The PTC device 16 increases resistance with an increase in temperature. The gasket 17 is made of, for example, an insulating material, and its surface may be coated with asphalt.

A center pin 24 may be inserted into the center of the spirally wound electrode body 20. A cathode lead 25 made of a conductive material such as Al is connected to the cathode 21, and an anode lead 26 made of a conductive material such as Ni is connected to the anode 22. The cathode lead 25 is connected to the safety valve mechanism 15 by welding or the like, and is electrically connected to the battery cover 14, and the anode lead 26 is connected to the battery can 11 by welding or the like, and is electrically connected to the battery can 11.

### [Cathode]

The cathode 21 includes, for example, a cathode current collector 21 A and a cathode active material layer 21 B disposed on one surface or both surfaces of the cathode current collector 21A. The cathode current collector 21A is formed of, for example, a conductive material such as Al, Ni, or stainless.

The cathode active material layer 21 B includes the above-described active material according to the embodiment of the technology as a cathode active material capable of inserting and extracting lithium ions, and may include any other material such as a cathode binder or a cathode conductor, if necessary.

The cathode active material layer 21 B may be configured of a single layer or a plurality of layers. In the cathode active material layer 21B configured of a single layer, the two or more kinds of different-composition complex phosphate particles are included in the layer. Moreover, in the cathode active material layer 21B configured of a plurality of layers, the two or more kinds of different-composition complex phosphate particles may be included in any layer of the plurality of layers.

In particular, in the cathode active material layer 21B configured of a plurality of layers, different kinds of different-composition complex phosphate particles may be included in different layers, respectively. For example, in the case where the iron-based particles and the manganese-based particles are used, in the cathode active material layer 21B configured of two layers, the iron-based particles and the manganese-based particles may be included in a lower layer and an upper layer, respectively, and vice versa.

It is to be noted that the cathode active material layer 21B may include one kind or two or more kinds of cathode materials as other cathode active materials, if necessary. For example, the cathode material is preferably a lithium-containing compound (except for a compound corresponding to the different-composition complex phosphate particles), since high energy density is obtainable. Examples of the lithium-containing compound include complex oxides including Li and a transition metal as constituent elements. In particular, the transition metal is preferably one kind or two or more kinds selected from the group consisting of Co, Ni, Mn, and Fe, since a higher voltage is obtainable. The lithium-containing compound is represented by, for example, a chemical formula of LiₓMO₂. In the formula, M is one or more kinds of transition metals. The value of x depends on a charge-discharge state of the battery, and is generally within a range of 0.05≤x≤1.10.

Examples of the complex oxide including Li and the transition metal include LiₓCoO₂, LiₓNiO₂, and a lithium-nickel-based complex oxide represented by a formula (10), since high battery capacity and good cycle characteristics are obtainable.

LiNi_{1-z}M_{z}O₂ (10)

where M is one or more kinds selected from the group consisting of Co, Mn, Fe, Al, V, Sn, Mg, Ti, Sr, Ca, Zr, Mo, Tc, Ru, Ta, W, Re, Yb, Cu, Zn, Ba, B, Cr, Si, Ga, P, Sb, and Nb, and z is within a range of 0.005<z<0.5.

In addition to the above-described materials, examples of the cathode material include oxides, bisulfides, chalcogenides, and conductive polymers. Examples of the oxides include titanium oxide, vanadium oxide, and manganese dioxide. Examples of the bisulfides include titanium bisulfide and molybdenum sulfide. Examples of the chalcogenides include niobium selenide. Examples of the conductive polymers include sulfur, polyaniline, and polythiophene. It is to be noted that any material other than the above-described materials may be used as the cathode material.

As the cathode binder, for example, one kind or two or more kinds of synthetic rubber or polymer materials are used. Examples of synthetic rubber include styrene butadiene-based rubber, fluorine-based rubber, and ethylene propylene diene. Examples of the polymer materials include polyvinylidene fluoride and polyimide.

As the cathode conductor, for example, one kind or two or more kinds of carbon materials are used. Examples of the carbon materials include graphite, carbon black, acetylene black, and ketjen black. It is to be noted that the cathode conductor may be a metal material, a conductive polymer, or the like, as long as the metal material, the conductive polymer, or the like is a material having electrical conductivity.

### [Anode]

The anode 22 includes an anode current collector 22A and an anode active material layer 22B disposed on one surface or both surfaces of the anode current collector 22A.

The anode current collector 22A is made of a conductive material such as Cu, Ni, or stainless. The surfaces of the anode current collector 22A are preferably roughened, since adhesion of the anode active material layer 22B to the anode current collector 22A is improved by a so-called anchor effect. In this case, the surfaces of the anode current collector 22A may be roughened at least in a region facing the anode active material layer 22B. Examples of a roughening method include a method of forming microparticles by electrolytic treatment. The electrolytic treatment is a method of forming microparticles on the surfaces of the anode current collector 22A in an electrolytic bath by an electrolytic method to form roughened surfaces. Copper foil formed by the electrolytic treatment is generally called electrolytic copper foil.

The anode active material layer 22B includes, as anode active materials, one kind or two or more kinds of anode materials capable of inserting and extracting lithium ions, and may include any other material such as an anode binder or an anode conductor, if necessary. It is to be noted that details of the anode binder and the anode conductor are, for example, similar to those of the cathode binder and the cathode conductor, respectively. In the anode active material layer 22B, for example, the chargeable capacity of the anode material is preferably larger than the discharge capacity of the cathode 21 to prevent unintended deposition of lithium metal during charge and discharge.

Examples of the anode material include carbon materials, since variations in crystal structure during insertion and extraction of lithium ions are very small, and high energy density and good cycle characteristics are obtainable accordingly, and since the carbon materials function as anode conductors. Examples of the carbon materials include graphitizable carbon, non-graphitizable carbon having the (002) plane with a surface separation of 0.37 nm or over, and graphite having the (002) plane with a surface separation of 0.34 nm or less. More specific examples of the carbon materials include pyrolytic carbons, cokes, glass-like carbon fibers, an organic polymer compound fired body, activated carbon, and carbon blacks. Cokes include pitch coke, needle coke, and petroleum coke. The organic polymer compound fired body is formed by firing (carbonizing) a polymer compound such as a phenolic resin or a furan resin at an appropriate temperature. In addition, as the carbon material, low-crystalline carbon or amorphous carbon subjected to heat treatment at approximately 1000°C or less may be used. It is to be noted that the carbon material may have any of a fibrous shape, a spherical shape, a granular shape, and a scale-like shape.

Examples of the anode material include a material (a metal-based material) including one kind or two or more kinds selected from the group consisting of metal elements and metalloid elements as a constituent element, since high energy density is obtainable. The metal-based material may be any one of the simple substances, alloys, and compounds of metal elements and metalloid elements, a material including two or more kinds selected from them, or a material including a phase of one kind or two or more kinds selected from them at least in part. It is to be noted that the alloy refers to an alloy including two or more kinds of metal elements as well as an alloy including one or more kinds of metal elements and one or more kinds of metalloid elements. Moreover, the alloy may include a non-metal element. The texture of the alloy may be a solid solution, a eutectic (eutectic mixture), an intermetallic compound, or the coexistence of two or more kinds selected from them.

Examples of the above-described metal elements and the above-described metalloid element include metal elements and metalloid elements capable of forming an alloy with Li. Specific examples include one kind or two or more kinds selected from the group consisting of Mg, B, Al, Ga, In, Si, Ge, Sn, Pb, Bi, Cd, Ag, Zn, Hf, Zr, Y, Pd, and Pt. In particular, one or both of Si and Sn are preferable, since Si and Sn have a high capability of inserting and extracting lithium ions, and high energy density is obtainable accordingly.

A material including one or both of Si and Sn may be the simple substance, an alloy, or a compound of Si or Sn, a material including two or more kinds selected from them, or a material including a phase of one kind or two or more kinds selected from them at least in part. It is to be noted that the simple substance is a simple substance (which may include trace amounts of impurities) in a general sense, and does not necessarily have a purity of 100%.

Examples of alloys of Si include materials including, as constituent elements other than Si, one kind or two or more kinds selected from the group consisting of Sn, Ni, Cu, Fe, Co, Mn, Zn, In, Ag, Ti, Ge, Bi, Sb, and Cr. Examples of compounds of Si include materials including C or O as a constituent element other than Si. It is to be noted that the compound of Si may include, as constituent elements other than Si, one kind or two or more kinds selected from the elements described in the alloy of Si.

Examples of the alloy of Si and the compound of Si include SiB₄, SiB₆, Mg₂Si, Ni₂Si, TiSi₂, MoSi₂, CoSi₂, NiSi₂, CaSi₂, CrSi₂, Cu₅Si, FeSi₂, MnSi₂, NbSi₂, and TaSi₂. Other examples include VSi₂, WSi₂, ZnSi₂, SiC, Si₃N₄, Si₂N₂O, SiOᵥ (0<v≤2), and LiSiO. It is to be noted that v in SiOᵥ may be within a range of 0.2<v<1.4.

Examples of the alloy of Sn include a material including, as constituent elements other than Sn, one kind or two or more kinds selected from the group consisting of Si, Ni, Cu, Fe, Co, Mn, Zn, In, Ag, Ti, Ge, Bi, Sb, and Cr. Examples of the compound of Sn include a material including C or O as a constituent element. It is to be noted that the compound of Sn may include, as constituent elements other than Sn, one kind or two or more kinds selected from the elements described in the alloy of Sn. Examples of the alloy of Sn and the compound of Sn include SnO_{w} (0<w≤2), SnSiO₃, LiSnO, and Mg₂Sn.

Moreover, as the material including Sn, for example, a material including Sn as a first constituent element, and a second constituent element and a third constituent element is preferable. Examples of the second constituent element include one kind or two or more kinds selected from the group consisting of Co, Fe, Mg, Ti, V, Cr, Mn, Ni, Cu, Zn, Ga, Zr, Nb, Mo, Ag, In, Ce, Hf, Ta, W, Bi, and Si. Examples of the third constituent element include one kind or two or more kinds selected from the group consisting of B, C, Al, and P. When the second and third constituent elements are included, high battery capacity and good cycle characteristics are obtainable.

In particular, a material including Sn, Co, and C (a SnCoC-containing material) is preferable. As the composition of the SnCoC-containing material, for example, the C content is within a range of 9.9 mass% to 29.7 mass% both inclusive, and the ratio of the Sn content and the Co content (Co/(Sn+Co)) is within a range of 20 mass% to 70 mass% both inclusive, since high energy density is obtainable in such a composition range.

The SnCoC-containing material includes a phase including Sn, Co, and C, and the phase preferably has a low crystalline structure or an amorphous structure. The phase is a reactive phase capable of reacting with Li, and good characteristics are obtainable by the presence of the phase. The half-width of a diffraction peak of the phase obtained by X-ray diffraction is preferably 1° or over at a diffraction angle of 2θ in the case where a CuKα ray is used as a specific X ray and the sweep rate is 1°/min, since lithium ions are inserted or extracted more smoothly, and reactivity with an electrolytic solution is reduced. It is to be noted that the SnCoC-containing material may include a phase including the simple substance of each constituent element or a part of the constituent element in addition to a low crystalline phase or an amorphous phase.

Whether or not the diffraction peak obtained by X-ray diffraction corresponds to a reactive phase capable of reacting with Li is easily determined by a comparison between X-ray diffraction charts before and after electrochemical reaction with Li. For example, when the position of the diffraction peak before the electrochemical reaction with Li is different from the position of the diffraction peak after the electrochemical reaction, the diffraction peak corresponds to a reactive phase capable of reacting with Li. In this case, the diffraction peak of a low crystalline phase or an amorphous phase is detected within a range of, for example, 28=20° to 50° both inclusive. Such a reactive phase includes the above-described constituent elements, and it is considered that the reactive phase is changed to be low crystalline or amorphous mainly by the presence of C.

In the SnCoC-containing material, at least a part of C as a constituent element is preferably bonded to a metal element or a metalloid element as another constituent element, since cohesion or crystallization of Sn or the like is suppressed. The bonding state of an element is checked by, for example, X-ray photoelectron spectroscopy (XPS). In a commercially available unit, an Al-Kα ray or an Mg-Kα ray is used as a soft X ray. In the case where at least a part of C is bonded to a metal element, a metalloid element, or the like, the peak of a composite wave of the 1s orbit (C1s) of C is observed in a region lower than 284.5 eV. It is to be noted that energy calibration is performed to allow the peak of the 4f orbit (Au4f) of an Au atom to be obtained at 84.0 eV. In this case, in general, as surface contamination carbon is present on a material surface, the peak of C1s of the surface contamination carbon is defined at 284.8 eV, and is used as energy reference. In an XPS measurement, the waveform of the peak of C1s is obtained as a form including the peak of the surface contamination carbon and the peak of C in the SnCoC-containing material; therefore, the peak of the surface contamination carbon and the peak of carbon are separated by, for example, analysis with use of commercially available software. In the analysis of the waveform, the position of a main peak existing on a lowest binding energy side is used as an energy reference (284.8 eV).

The SnCoC-containing material may include still another constituent element, if necessary. Such a constituent element is, for example, one kind or two or more kinds selected from the group consisting of Si, Fe, Ni, Cr, In, Nb, Ge, Ti, Mo, Al, P, Ga, and Bi.

In addition to the SnCoC-containing material, a material including Sn, Co, Fe, and C (an SnCoFeC-containing material) is also preferable. The composition of the SnCoFeC-containing material may be arbitrarily set. For example, a composition with a small Fe content is set as follows. The C content is within a range of 9.9 mass% to 29.7 mass% both inclusive, the Fe content is within a range of 0.3 mass% to 5.9 mass% both inclusive, and the ratio of the Sn content and the Co content (Co/(Sn+Co)) is within a range of 30 mass% to 70 mass% both inclusive. Moreover, for example, a composition with a large Fe content is set as follows. The C content is within a range of 11.9 mass% to 29.7 mass% both inclusive, and the ratio of the Sn content, the Co content, and the Fe content ((Co+Fe)/(Sn+Co+Fe)) is within a range of 26.4 mass% to 48.5 mass% both inclusive, and the ratio of the Co content and the Fe content (Co/(Co+Fe)) is within a range of 9.9 mass% to 79.5 mass% both inclusive, since in such a composition range, high energy density is obtainable. The SnCoFeC-containing material has physical properties (such as half-width) similar to those of the above-described SnCoC-containing material.

In addition, examples of the anode material may include metal oxides and polymer compounds. Examples of metal oxides include iron oxide, ruthenium oxide, and molybdenum oxide. Examples of the polymer compounds include polyacetylene, polyaniline, and polypyrrole.

The anode active material layer 22B is formed by, for example, a coating method, a vapor-phase method, a liquid-phase method, a spraying method, a firing method (a sintering method), or a combination of two or more kinds of the methods. In the coating method, for example, a particulate anode active material is mixed with a binder or the like to form a mixture, and the mixture is dispersed in a solvent such as an organic solvent, and then coating with the mixture is performed. Examples of the vapor-phase method include a physical deposition method and a chemical deposition method. More specific examples of the vapor-phase method include a vacuum deposition method, a sputtering method, an ion plating method, a laser ablation method, a thermal chemical vapor deposition method, a chemical vapor deposition (CVD) method, and a plasma chemical vapor deposition method. Examples of the liquid-phase method include an electrolytic plating method, and an electroless plating method. In the spray method, the anode active material in a molten state or a semi-molten state is sprayed. In the firing method, for example, after coating is performed by steps similar to those of the coating method, the mixture is heated at a higher temperature than the melting point of the binder or the like. As the firing method, a known technique may be used. Examples of the firing method include an atmosphere firing method, a reaction firing method, and a hot press firing method.

In the secondary battery, as described above, to prevent unintended deposition of lithium metal on the anode 22 during charge, the electrochemical equivalent of the anode material capable of inserting and extracting lithium ions is larger than the electrochemical equivalent of the cathode. Moreover, when an open-circuit voltage (that is, a battery voltage) in a fully-charged state is 4.25 V or over, compared to the case where the open-circuit voltage is 4.20 V, the extraction amount of lithium ions per unit mass is larger even if the same cathode active material is used. Therefore, the amounts of the cathode active material and the anode active material are adjusted accordingly. Thus, high energy density is obtainable.

### [Separator]

The separator 23 isolates between the cathode 21 and the anode 22 to allow lithium ions to pass therethrough while preventing a short circuit of a current due to contact between the cathode 21 and the anode 22. The separator 23 is configured of, for example, a porous film of a synthetic resin or ceramic, and may be configured of a laminate film formed by laminating two or more kinds of porous films. Examples of the synthetic resin include polytetrafluoroethylene, polypropylene, and polyethylene.

In particular, for example, the separator 23 may include a base layer made of the above-described porous film and a polymer compound layer disposed on one surface or both surfaces of the base layer, since adhesion of the separator 23 to the cathode 21 and the anode 22 is improved, thereby suppressing distortion of the spirally wound electrode body 20. Thus, decomposition reaction of the electrolytic solution is suppressed, and leakage of the electrolytic solution with which the base layer is impregnated is suppressed; therefore, if charge and discharge are repeated, resistance of the secondary battery is less likely to increase, and battery swelling is suppressed.

The polymer compound layer includes, for example, a polymer material such as polyvinylidene fluoride, since the polymer material is good in physical strength and is electrochemically stable. However, the polymer material may be any polymer material other than polyvinylidene fluoride. For example, the polymer compound layer is formed by preparing a solution in which the polymer material is dissolved, and then coating a surface of the base layer with the solution or immersing the base layer in the solution, and drying the base layer.

### [Electrolytic solution]

The separator 23 is impregnated with an electrolytic solution which is a liquid electrolyte. The electrolytic solution includes a solvent and an electrolyte salt, and, if necessary, any other material such as an additive.

The solvent includes, for example, one kind or two or more kinds of nonaqueous solvents such as organic solvents. Examples of the nonaqueous solvent include ethylene carbonate, propylene carbonate, butylene carbonate, dimethyl carbonate, diethyl carbonate, ethyl methyl carbonate, methyl propyl carbonate, γ-butyrolactone, γ-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethylacetate, ethyl trimethylacetate, acetonitrile, glutaronitrile, adiponitrile, methoxyacetonitrile, 3-methoxypropionitrile, N,N-dimethylformamide, N-methylpyrrolidinone, N-methyloxazolidinone, N,N'-dimethylimidazolidinone, nitromethane, nitroethane, sulfolane, trimethyl phosphate, and dimethyl sulfoxide, since good battery capacity, good cycle characteristics, good storage characteristics, and the like are obtainable.

In particular, one or more kinds selected from the group consisting of ethylene carbonate, propylene carbonate, dimethyl carbonate, diethyl carbonate, and ethyl methyl carbonate are preferable, since better characteristics are obtainable. In this case, a combination of a high-viscosity (high-permittivity) solvent (for example, relative permittivity ε≥30) such as ethylene carbonate or propylene carbonate and a low-viscosity solvent (for example, viscosity≤1 mPa·s) such as dimethyl carbonate, ethyl methyl carbonate, or diethyl carbonate is more preferable, since the dissociation property of the electrolyte salt and ion mobility are improved.

In particular, the solvent preferably includes a cyclic carbonate ester (an unsaturated cyclic carbonate ester) having one or two or more unsaturated carbon bonds, since a stable protective film is formed on a surface of the anode 22 during charge and discharge, thereby suppressing decomposition reaction of the electrolytic solution. Examples of the unsaturated cyclic carbonate ester include vinylene carbonate (1,3-dioxol-2-one), methyl vinylene carbonate (4-methyl-1,3-dioxol-2-one), ethyl vinylene carbonate (4-ethyl-1,3-dioxol-2-one), 4,5-dimethyl-1,3-dioxol-2-one, 4,5-diethyl-1,3-dioxol-2-one, 4-fluoro-1,3-dioxol-2-one, and 4-trifluoromethyl-1,3-dioxol-2-one. It is to be noted that the content of the unsaturated cyclic carbonate ester in the solvent is, for example, within a range of 0.01 mass% to 10 mass% both inclusive, since decomposition reaction of the electrolytic solution is suppressed without excessively reducing battery capacity.

Moreover, the solvent preferably includes one or both of a chain carbonate ester (a halogenated chain carbonate ester) having one or two or more halogen atoms and a cyclic carbonate ester (a halogenated cyclic carbonate ester) having one or two or more halogen atoms, since a stable protective film is formed on the surface of the anode 22 during charge and discharge, thereby suppressing decomposition reaction of the electrolytic solution. The kind of halogen is not specifically limited; however, F, Cl, or Br is preferable, and F is more preferable, since a higher effect than that of the other halogens is obtainable. The number of halogen atoms is more preferably 2 than 1, and may be 3 or more, since a firmer and stabler protective film is formed, thereby further suppressing decomposition reaction of the electrolytic solution.

Examples of the halogenated chain carbonate ester include fluoromethyl methyl carbonate, bis(fluoromethyl) carbonate, and difluoromethyl methyl carbonate. Examples of the halogenated cyclic carbonate ester include 4-fluoro-1,3-dioxolane-2-one, 4-chloro-1,3-dioxolane-2-one, 4,5-difluoro-1,3-dioxolane-2-one, tetrafluoro-1,3-dioxolane-2-one, 4-fluoro-5-chloro-1,3-dioxolane-2-one, 4,5-dichloro-1,3-dioxolane-2-one, tetrachloro-1,3-dioxolane-2-one, 4,5-bistrifluoromethyl-1,3-dioxolane-2-one, 4-trifluoromethyl-1,3-dioxolane-2-one, 4,5-difluoro-4,5-dimethyl-1,3-dioxolane-2-one, 4-methyl-5,5-difluoro-1,3-dioxolane-2-one, 4-ethyl-5,5-difluoro-1,3-dioxolane-2-one, 4-trifluoromethyl-5-fluoro-1,3-dioxolane-2-one, 4-trifluoromethyl-5-methyl-1,3-dioxolane-2-one, 4-fluoro-4,5-dimethyl-1,3-dioxolane-2-one, 4,4-difluoro-5-(1,1-difluoroethyl)-1,3-dioxolane-2-one, 4,5-dichloro-4,5-dimethyl-1,3-dioxolane-2-one, 4-ethyl-5-fluoro-1,3-dioxolane-2-one, 4-ethyl-4,5-difluoro-1,3-dioxolane-2-one, 4-ethyl-4,5,5-trifluoro-1,3-dioxolane-2-one, and 4-fluoro-4-methyl-1,3-dioxolane-2-one. It is to be noted that the contents of the halogenated chain carbonate ester and the halogenated cyclic carbonate ester in the solvent are, for example, within a range of 0.01 mass% to 50 mass% both inclusive, since decomposition reaction of the electrolytic solution is suppressed without excessively reducing battery capacity.

Moreover, the solvent may include a sultone (a cyclic sulfonate ester), since chemical stability of the electrolytic solution is improved. Examples of the sultone include propane sultone and propene sultone. The content of the sultone in the solvent is not specifically limited, but is, for example, within a range of 0.5 mass% to 5 mass%, both inclusive, since decomposition reaction of the electrolytic solution is suppressed without excessively reducing battery capacity.

Further, the solvent may include an acid anhydride, since chemical stability of the electrolytic solution is further improved. Examples of the acid anhydride include a dicarboxylic anhydride, a disulfonic anhydride, and an anhydride of a carboxylic acid and a sulfonic acid. Examples of the dicarboxylic anhydride include succinic anhydride, glutaric anhydride, and maleic anhydride. Examples of the disulfonic anhydride include ethanedisulfonic anhydride and propanedisulfonic anhydride. Examples of the anhydride of a carboxylic acid and a sulfonic acid include sulfobenzoic anhydride, sulfopropionic anhydride, and sulfobutyric anhydride. It is to be noted that the content of the acid anhydride in the solvent is not specifically limited, but is, for example, within a range of 0.5 mass% to 5 mass% both inclusive, since decomposition reaction of the electrolytic solution is suppressed without excessively reducing battery capacity.

### [Electrolyte salt]

The electrolyte salt includes, for example, one kind or two or more kinds of lithium salts which will be described below. However, the electrolyte salt may include, for example, any salt other than lithium salt (for example, a light-metal salt other than lithium salt).

Examples of the lithium salt include the following compounds, i.e., LiPF₆, LiBF₄, LiClO₄, LiAsF₆, LiB(C₆H₅)₄, LiCH₃SO₃ LiCF₃SO₃, LiAlCl₄, Li₂SiF₆, LiCl, and LiBr, since good battery capacity, good cycle characteristics, good storage characteristics, and the like are obtainable.

In particular, one or more kinds selected from the group consisting of LiPF₆, LiBF₄, LiClO₄, and LiAsF₆ are preferable, and LiPF₆ is more preferable, since internal resistance is reduced, and a higher effect is obtainable accordingly.

The content of the electrolyte salt is preferably within a range of 0.3 mol/kg to 3.0 mol/kg both inclusive relative to the solvent, since high ionic conductivity is obtainable.

### [Operation of secondary battery]

In the secondary battery, for example, lithium ions extracted from the cathode 21 are inserted into the anode 22 through the electrolytic solution during charge, and lithium ions extracted from the anode 22 are inserted into the cathode 21 through the electrolytic solution during discharge.

### [Method of manufacturing secondary battery]

The secondary battery is manufactured by, for example, the following steps.

First of all, the cathode 21 is formed. First, two or more kinds of different-composition complex phosphate particles as cathode active materials and, if necessary, another cathode active material, the cathode binder, the cathode conductor, and the like are mixed to form a cathode mixture. Then, the cathode mixture is dispersed in an organic solvent or the like to form paste-form cathode mixture slurry. Next, both surfaces of the cathode current collector 21 A are coated with the cathode mixture slurry, and the cathode mixture slurry is dried to form the cathode active material layer 21B. Then, the cathode active material layer 21 B is compression molded by a roller press or the like while applying heat, if necessary. In this case, compression molding may be repeated a plurality of times.

Moreover, the anode 22 is formed by steps similar to the above-described steps of forming the cathode 21. An anode mixture is formed by mixing the anode active material and, if necessary, the anode binder, the anode conductor, and the like, and the anode mixture is dispersed in an organic solvent or the like to form paste-form anode mixture slurry. Next, both surfaces of the anode current collector 22A are coated with the anode mixture slurry, and the anode mixture slurry is dried to form the anode active material layer 22B. Then, if necessary, the anode active material layer 22B is compression molded.

Finally, the secondary battery is assembled with use of the cathode 21 and the anode 22. First, the cathode lead 25 and the anode lead 26 are attached to the cathode current collector 21A and the anode current collector 22A, respectively, by a welding method or the like. Then, the cathode 21 and the anode 22 are laminated with the separator 23 in between, and they are spirally wound to form the spirally wound electrode body 20, and then the center pin 24 is inserted into the center of the spirally wound electrode body 20. Next, the spirally wound electrode body 20 sandwiched between the pair of insulating plates 12 and 13 is contained in the battery can 11. In this case, an end of the cathode lead 25 and an end of the anode lead 26 are attached to the safety valve mechanism 15 and the battery can 11, respectively, by a welding method or the like. Then, the electrolytic solution is injected into the battery can 11 to impregnate the separator 23 with the electrolytic solution. Next, the battery cover 14, the safety valve mechanism 15, and the PTC device 16 are caulked in an open end of the battery can 11 by the gasket 17.

### [Functions and effects of secondary battery]

In the cylindrical type secondary battery, the cathode 21 includes the above-described active material as the cathode active material. Therefore, electrical resistance of the cathode active material layer 21B is reduced, and good battery characteristics are obtained accordingly. Functions and effects other than this are similar to those of the active material.

### (2-2. Laminate film type)

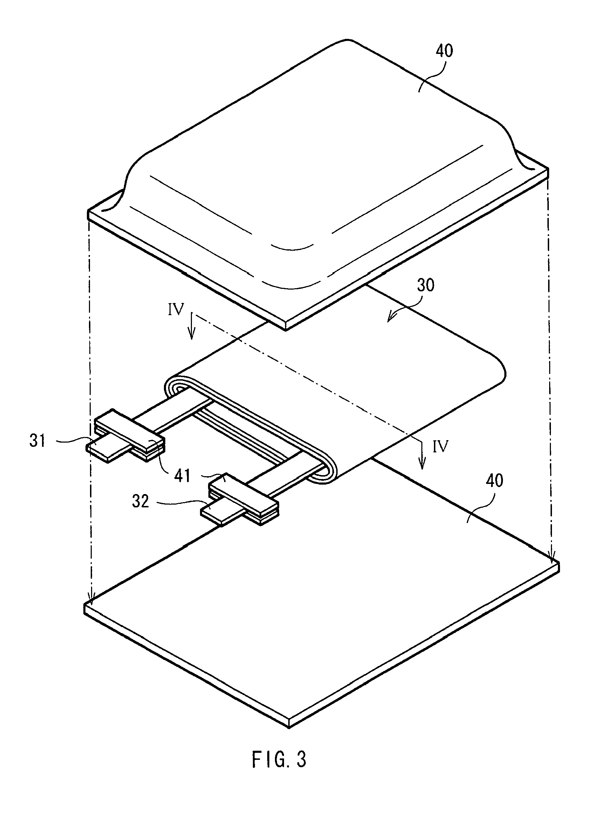

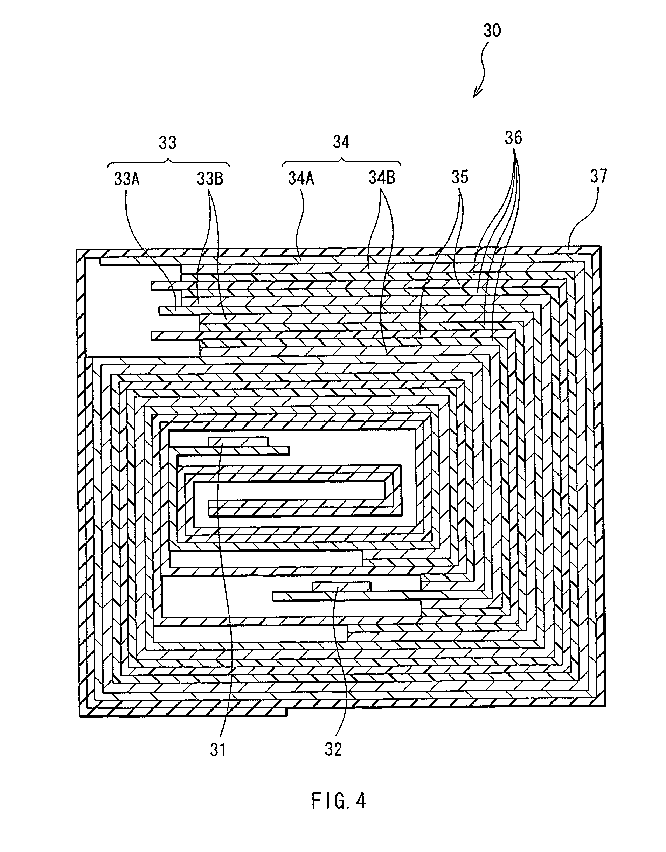

FIG. 3 illustrates an exploded perspective configuration of another secondary battery according to the embodiment of the technology, and FIG. 4 illustrates an enlarged sectional view taken along a line IV-IV of a spirally wound electrode body 30 illustrated in FIG. 3. A description will be given of constituent components of the secondary battery with reference to the above-described components of the cylindrical type secondary battery as appropriate.

### [Entire configuration of secondary battery]

The secondary battery described here is a so-called laminate film type lithium ion secondary battery. In the secondary battery, the spirally wound electrode body 30 is contained in film-shaped package members 40. The spirally wound electrode body 30 is formed by laminating a cathode 33 and an anode 34 with a separator 35 and an electrolyte layer 36 in between, and spirally winding them. A cathode lead 31 and an anode lead 32 are attached to the cathode 33 and the anode 34, respectively. An outermost portion of the spirally wound electrode body 30 is protected with a protective tape 37.

The cathode lead 31 and the anode lead 32 are drawn, for example, from the interiors of the package members 40 to outside in the same direction. The cathode lead 31 is made of, for example, a conductive material such as Al, and the anode lead 32 is made of, for example, a conductive material such as Cu, Ni, or stainless. These conductive materials each have a sheet shape or a mesh shape.

The package members 40 are laminate films formed by laminating, for example, a bonding layer, a metal layer, and a surface protection layer in this order. In the laminate films, for example, edge portions of the bonding layers of two laminate films are adhered to each other by fusion bonding or an adhesive to allow the bonding layers to face the spirally wound electrode body 30. The bonding layer is, for example, a film of polyethylene or polypropylene. The metal layer is, for example, Al foil. The surface protection layer is, for example, a film of nylon or polyethylene terephthalate.

In particular, as the package members 40, aluminum laminate films each formed by laminating a polyethylene film, aluminum foil, and a nylon film in this order are preferable. However, the package members 40 may be laminate films with any other laminate configuration, a polymer film of polypropylene or the like, or a metal film.

Adhesive films 41 for preventing the entry of outside air are inserted between each package member 40 and the cathode lead 31 and between each package member 40 and the anode lead 32. The adhesive films 41 are made of, for example, a material having adhesion to the cathode lead 31 and the anode lead 32. Examples of such a material include polyolefin resins such as polyethylene, polypropylene, modified polyethylene, and modified polypropylene.

The cathode 33 includes, for example, a cathode current collector 33A and a cathode active material layer 33B disposed on both surfaces of the cathode current collector 33A. The anode 34 includes, for example, an anode current collector 34A and an anode active material layer 34B disposed on both surfaces of the anode current collector 34A. The configurations of the cathode current collector 33A, the cathode active material layer 33B, the anode current collector 34A, and the anode active material layer 34B are similar to those of the cathode current collector 21 A, the cathode active material layer 21 B, the anode current collector 22A, and the anode active material layer 22B, respectively. In other words, the cathode active material layer 33B of the cathode 33 includes two or more kinds of different-composition complex phosphate particles as the cathode active materials. Moreover, the configuration of the separator 35 is similar to that of the separator 23.

The electrolyte layer 36 is formed by holding an electrolytic solution by a polymer compound, and may include any other material such as an additive, if necessary. The electrolyte layer 36 is a so-called gel electrolyte, since high ionic conductivity (for example, 1 mS/cm or over at room temperature) is obtainable, and leakage of the electrolytic solution is prevented.

The polymer compound is, for example, one kind or two or more kinds selected from the following polymer materials. The polymer materials include polyacrylonitrile, polyvinylidene fluoride, polytetrafluoroethylene, polyhexafluoropropylene, polyethylene oxide, polypropylene oxide, polyphosphazene, polysiloxane, polyvinyl fluoride, polyvinyl acetate, polyvinyl alcohol, poly(methyl methacrylate), polyacrylic acids, polymethacrylic acids, styrene-butadiene rubber, nitrile-butadiene rubber, polystyrene, polycarbonate, and a copolymer of vinylidene fluoride and hexafluoropyrene. In particular, polyvinylidene fluoride or the copolymer of vinylidene fluoride and hexafluoropyrene is preferable, since they are electrochemically stable.

The composition of the electrolytic solution is similar to that in the cylindrical type secondary battery. However, in the electrolyte layer 36 which is a gel electrolyte, the solvent of the electrolytic solution refers to a wide concept including not only a liquid solvent but also a material having ionic conductivity which is capable of dissociating an electrolyte salt. Therefore, in the case where a polymer compound having ionic conductivity is used, the polymer compound is included in the concept of the solvent.

It is to be noted that, instead of the gel electrolyte layer 36, the electrolytic solution may be used as it is. In this case, the separator 35 may be impregnated with the electrolytic solution.

### [Operation of secondary battery]

In the secondary battery, for example, lithium ions extracted from the cathode 33 are inserted into the anode 34 through the electrolyte layer 36 during charge. On the other hand, for example, lithium ions extracted from the anode 34 are inserted into the cathode 33 through the electrolyte layer 36 during discharge.

### [Method of manufacturing secondary battery]

The secondary battery including the gel electrolyte layer 36 is manufactured by, for example, the following three kinds of methods.

In a first method, first, by steps similar to the above-described steps of forming the cathode 21 and the anode 22, the cathode 33 and the anode 34 are formed. In this case, the cathode active material layer 33B is formed on both surfaces of the cathode current collector 33A to form the cathode 33, and the anode active material layer 34B is formed on both surfaces of the anode current collector 34A to form the anode 34. Next, a precursor solution including the electrolytic solution, the polymer compound, the organic solvent, and the like is prepared, and then the cathode 33 and the anode 34 are coated with the precursor solution to form the gel electrolyte layer 36. Next, the cathode lead 31 and the anode lead 32 are attached to the cathode current collector 33A and the anode current collector 34A, respectively, by a welding method or the like. Then, the cathode 33 on which the electrolyte layer 36 is formed and the anode 34 on which the electrolyte layer 36 is formed are laminated and spirally wound with the separator 35 in between to form the spirally wound electrode body 30, and then the protective tape 37 is bonded to an outermost portion of the spirally wound electrode body 30. When the separator 35 is prepared, if necessary, a coating layer including an organic silicon compound on a surface of a base layer is formed. Next, the spirally wound electrode body 30 is sandwiched between two film-shaped package members 40, and edge portions of the package members 40 are adhered to each other by a thermal fusion bonding method or the like to seal the spirally wound electrode body 30 in the package members 40. In this case, the adhesive films 41 are inserted between the cathode lead 31 and each package member 40 and between the anode lead 32 and each package member 40.

In a second method, first, the cathode lead 31 and the anode lead 32 are attached to the cathode 33 and the anode 34, respectively. Next, the cathode 33 and the anode 34 are laminated and spirally wound with the separator 35 in between to form a spirally wound body as a precursor body of the spirally wound electrode body 30, and then the protective tape 37 is bonded to an outermost portion of the spirally wound body. Then, the spirally wound body is sandwiched between two film-shaped package members 40, and the edge portions of the package members 40 except for edge portions on one side are adhered by a thermal fusion bonding method or the like to contain the spirally wound body in the package members 40 configuring a pouched package. Next, an electrolytic composition which includes the electrolytic solution, monomers as materials of a polymer compound, and a polymerization initiator, and, if necessary, any other material such as a polymerization inhibitor is prepared, and is injected into the package members 40 configuring the pouched package, and then an opened portion of the pouched package configured of the package members 40 is sealed by a thermal fusion bonding method or the like. Then, the monomers are polymerized by applying heat to form the polymer compound, thereby forming the gel electrolyte layer 36.

In a third method, as in the case of the above-described second method, the spirally wound body is formed, and the spirally wound body is contained in the package members 40 configuring the pouched package, except that the separator 35 having both surfaces coated with a polymer compound is used. Examples of the polymer compound applied to the separator 35 include polymers (a homopolymer, a copolymer, a multicomponent copolymer, and the like) including vinylidene fluoride as a component. More specifically, examples of the polymer compound include polyvinylidene fluoride, a binary copolymer including vinylidene fluoride and hexafluoropropylene as components, and a ternary copolymer including vinylidene fluoride, hexafluoropropylene, and chlorotrifluoroethylene as components. It is to be noted that one kind or two or more kinds of other polymer compounds may be used together with the polymer including vinylidene fluoride as a component. Next, the electrolytic solution is prepared, and injected into the package members 40, and then an opened portion of a pouched package configured of the package members 40 is sealed by a thermal fusion bonding method or the like. Next, the package members 40 are heated while being weighted to bring the separator 35 into close contact with the cathode 33 and the anode 34 with the polymer compound in between. The polymer compound is thereby impregnated with the electrolytic solution, and the polymer compound is gelatinized to form the electrolyte layer 36.

In the third method, compared to the first method, swelling of the secondary battery is further suppressed. Moreover, in the third method, compared to the second method, monomers as the materials of the polymer compound, the solvent, and the like hardly remain in the electrolyte layer 36, thereby better controlling a step of forming the polymer compound. Therefore, sufficient adhesion between the cathode 33, anode 34 and the separator 35, and the electrolyte layer 36 is obtained.

### [Functions and effects of secondary battery]

In the laminate film type secondary battery, the cathode 33 includes the above-described active material as the cathode active material; therefore, good battery characteristics are obtained by a reason similar to that in the case of the cylindrical type secondary battery.

### (3. Applications of secondary batteries)

Next, application examples of any of the above-described secondary batteries will be described below.

The application of any of the secondary batteries is not specifically limited, as long as any of the secondary batteries is applied to machines, devices, appliances, units, systems (combinations of a plurality of devices), and the like which each are allowed to use any of the secondary batteries as a power supply for drive or a power storage source for power storage. In the case where any of the secondary batteries is used as a power supply, the power supply may be a main power supply (a power supply to be preferentially used) or an auxiliary power supply (a power supply to be used instead of the main power supply or by switching from the main power supply). The kind of the main power supply in the latter case is not limited to secondary batteries.

The secondary batteries are applied to, for example, the following applications. The applications include portable electronic units such as video cameras, digital still cameras, cellular phones, notebook personal computers, cordless telephones, headphone stereos, portable radios, portable televisions, and personal digital assistants. The applications further include portable home appliances such as electric shavers, memory units such as backup power supplies and memory cards, electric power tools such as electric drills and electric saws, battery packs used as power supplies of notebook personal computers, medical electronic units such as pacemakers and hearing aids, electric vehicles such as electric cars (including hybrid vehicles), and electric energy storage system such as household battery systems storing power in case of emergency or the like. The secondary batteries may be applied to any applications other than the above-described applications.

In particular, the secondary batteries are effectively applied to the battery packs, the electric vehicles, the electric energy storage systems, the electric power tools, the electronic units, and the like, since they need good battery characteristics, and their characteristics are effectively improved by using the secondary batteries according to the embodiment of the technology. It is to be noted that the battery packs are power supplies using any of the secondary batteries, and are so-called assembled batteries or the like. The electric vehicles are vehicles operating (running) with use of any of the secondary batteries as a power supply for drive, and as described above, the electric vehicles may include vehicles (such as hybrid vehicles) including a driving source in addition to the secondary battery. The electric energy storage systems are systems using any of the secondary batteries as a power storage source. For example, in a household electric energy storage system, power is stored in any of the secondary batteries as a power storage source, and the power is consumed when necessary, thereby allowing home appliances or the like to be used by the household electric energy storage system. The electric power tools are tools having a movable section (such as a drill) which is movable with use of any of the secondary batteries as a power supply for drive. The electronic units are unit fulfilling various functions with use of any of the secondary batteries as a power supply for drive.

Some application examples of the secondary batteries will be described in detail below. It is to be noted that the configurations of the application examples which will be described below are just examples, and may be modified, as necessary.

### (3-1. Battery pack)

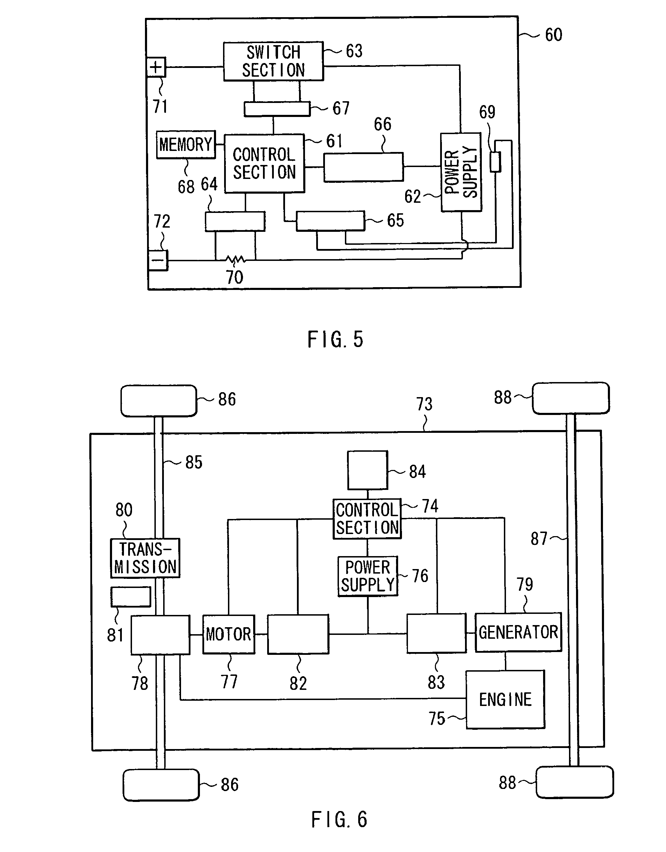

FIG. 5 illustrates a block configuration of a battery pack. As illustrated in FIG. 5, the battery pack includes, for example, a control section 61, a power supply 62, a switch section 63, a current measurement section 64, a temperature detection section 65, a voltage detection section 66, a switch control section 67, a memory 68, a temperature detection device 69, a current sensing resistor 70, a cathode terminal 71, and an anode terminal 72 in an enclosure 60 made of a plastic material or the like.

The control section 61 controls operation of the entire battery pack (including a usage state of the power supply 62), and includes, for example, a central processing unit (CPU). The power supply 62 includes one or two or more secondary batteries (not illustrated). The power supply 62 is, for example, an assembled battery including two or more secondary batteries, and the secondary batteries may be connected to each other in series, in parallel, or in any series-parallel combination. As an example, the power supply 62 includes six secondary batteries connected in a configuration of two in parallel by three in series.

The switch section 63 switches the usage state of the power supply 62 (connection and disconnection between the power supply 62 and an external unit) according to an instruction from the control section 61. The switch section 63 includes, for example, a charge control switch, a discharge control switch, a diode for charge, and a diode for discharge (all not illustrated). The charge control switch and the discharge control switch are, for example, semiconductor switches such as metal oxide semiconductor field-effect transistors (MOSFETs) using a metal oxide semiconductor.

The current measurement section 64 measures a current with use of the current sensing resistor 70, and outputs a measurement result to the control section 61. The temperature detection section 65 measures a temperature with use of the temperature detection device 69, and outputs a measurement result to the control section 61. The temperature measurement result is used, for example, in the case where the control section 61 performs charge-discharge control during abnormal heat generation or in the case where the control section 61 performs a correction process during calculation of a remaining capacity level. The voltage detection section 66 measures the voltage of the secondary battery in the power supply 62, and performs analog-to-digital (A/D) conversion on the measured voltage to supply the voltage to the control section 61.

The switch control section 67 controls the operation of the switch section 63 based on signals supplied from the current measurement section 64 and the voltage detection section 66.

For example, when a battery voltage reaches an overcharge detection voltage, the switch control section 67 turns off the switch section 63 (the charge control switch), thereby controlling a charge current not to flow through a current path of the power supply 62. Thus, in the power supply 62, only discharge through the diode for discharge is allowed to be executed. It is to be noted that, for example, when a large current flows during charge, the switch control section 67 blocks a charge current.

Moreover, for example, when the battery voltage reaches an overdischarge detection voltage, the switch control section 67 turns off the switch section 63 (the discharge control switch), thereby controlling a discharge current not to flow through the current path of the power supply 62. Thus, in the power supply 62, only charge through the diode for charge is allowed to be executed. It is to be noted that, for example, when a large current flows during discharge, the switch control section 67 blocks a discharge current.

It is to be noted that, in the secondary battery, for example, the overcharge detection voltage is 4.20 V±0.05 V, and the overdischarge detection voltage is 2.4 V±0.1V.

The memory 68 is, for example, an EEPROM which is a non-volatile memory, or the like. In the memory 68, for example, values computed by the control section 61, and information (for example, initial internal resistance) of the secondary battery measured in a manufacturing process are stored. It is to be noted that, when the value of full-charge capacity of the secondary battery is stored in the memory 68, the control section 10 is allowed to keep track of information such as the remaining capacity level.

The temperature detection device 69 measures the temperature of the power supply 62, and outputs a measurement result to the control section 61, and is, for example, a thermistor.

The cathode terminal 71 and the anode terminal 72 are terminals connected to an external unit (such as a notebook personal computer) operating by the battery pack or an external unit (such as a charger) used to charge the battery pack. The power supply 62 is charged and discharged through the cathode terminal 71 and the anode terminal 72.

### (3-2. Electric vehicle)

FIG. 6 illustrates a block configuration of a hybrid vehicle as an example of the electric vehicle. For example, as illustrated in FIG. 6, the electric vehicle includes a control section 74, an engine 75, a power supply 76, a drive motor 77, a differential gear 78, a generator 79, a transmission 80, and a clutch 81, inverters 82 and 83, and various sensors 84 in a body 73 made of metal. The electric vehicle further includes, for example, a front-wheel axle 85 and front wheels 86 which are connected to the differential gear 78 and the transmission 80, and a rear-wheel axle 87 and rear wheels 88.

The electric vehicle is capable of running with use of one of the engine 75 and the motor 77 as a driving source. The engine 75 is a main power source, and is, for example, a gasoline engine or the like. When the engine 75 is used as a power source, for example, the driving force (torque) of the engine 75 is transmitted to the front wheels 86 or the rear wheels 88 through drive sections, i.e., the differential gear 78, the transmission 80, and the clutch 81. It is to be noted that the torque of the engine 75 is also transmitted to the generator 79, thereby allowing the generator 79 to generate AC power by the torque, and the AC power is converted into DC power by the inverter 83 to be stored in the power supply 76. On the other hand, in the case where the motor 77 as a conversion section is used as a power source, power (DC power) supplied from the power supply 76 is converted into AC power by the inverter 82, and the motor 77 is driven by the AC power. For example, the driving force (torque) into which the power is converted by the motor 77 is transmitted to the front wheels 86 or the rear wheels 88 through the drive sections, i.e., the differential gear 78, the transmission, and the clutch 81.

It is to be noted that when the electric vehicle is slowed down by a braking mechanism (not illustrated), resistance while slowing the electric vehicle down may be transmitted to the motor 77 as a torque, thereby allowing the motor 77 to generate AC power by the torque. The AC power is preferably converted into DC power by the inverter 82, thereby storing DC regenerative power in the power supply 76.

The control section 74 controls operation of the entire electric vehicle, and includes, for example, a CPU. The power supply 76 includes one or two or more secondary batteries (not illustrated). The power supply 76 may be connected to an external power supply to receive power from the external power supply; therefore, the power supply 76 is allowed to store power. The various sensors 84 are used to control the RPM of the engine 75 or opening of a throttle valve (throttle opening; not illustrated). The various sensors 84 include, for example, a speed sensor, an acceleration sensor, and an engine RPM sensor.

It is to be noted that the hybrid vehicle is described above as the electric vehicle; however, the electric vehicle may be a vehicle (electric car) driven only by the power supply 76 and the motor 77 without using the engine 75.

### (3-3. Electric energy storage system)

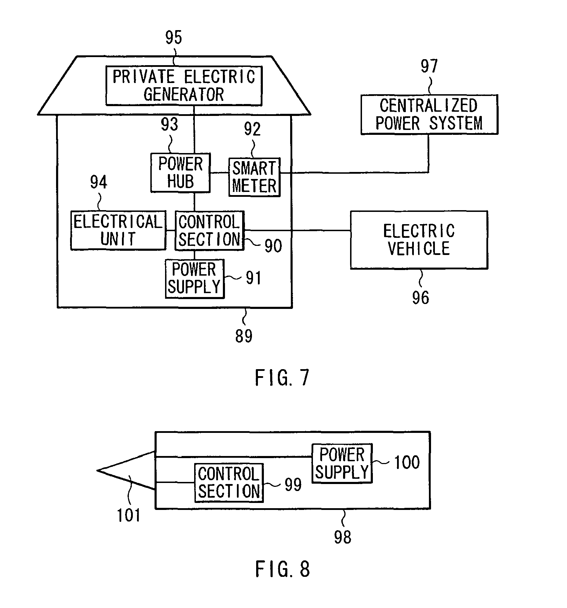

FIG. 7 illustrates a block configuration of an electric energy storage system. For example, as illustrated in FIG. 7, the electric energy storage system includes a control section 90, a power supply 91, a smart meter 92, and a power hub 93 in a house 89 such as a general house or a commercial building.

In this case, for example, the power supply 91 is connected to an electrical unit 94 placed in the house 89, and is connectable to an electric vehicle 96 placed outside the house 89. Moreover, for example, the power supply 91 is connected to a private electric generator 95 mounted on the house 89 through the power hub 93, and is connectable to an external centralized power system 97 through the smart meter 92 and the power hub 93.

It is to be noted that examples of the electrical unit 94 include one or two or more household electrical appliances such as a refrigerator, an air conditioner, a television, and a boiler. Examples of the private electric generator 95 include one kind or two or more kinds of solar power systems or wind power generators. Examples of the electric vehicle 96 include one kind or two or more kinds of electric vehicles, electric motorbikes, and hybrid vehicles. Examples of the centralized power system 97 include one kind or two or more kinds of thermal power plants, nuclear power plants, hydroelectric power plants, and wind power plants.

The control section 90 controls operation of the entire electric energy storage system (including a usage state of the power supply 91), and includes, for example, a CPU. The power supply 91 includes one or two or more secondary batteries (not illustrated). The smart meter 92 is a network-compatible wattmeter mounted in the house 89 demanding power, and is allowed to communicate with a power supplier. Accordingly, for example, the smart meter 92 controls balance between demand and supply in the house 89 while communicating with an external unit as necessary, thereby securing efficient and stable energy supply.

In the electric energy storage system, for example, power from the centralized power system 97 as the external power supply is stored in the power supply 91 through the smart meter 92 and the power hub 93, and power from a solar power system 95 as an independent power supply is stored in the power supply 91 through the power hub 93. The power stored in the power supply 91 is supplied to the electrical unit 94 or the electric vehicle 96 as necessary according to an instruction from the control section 90; therefore, the electrical unit 94 is allowed to operate, and the electric vehicle 96 is allowed to be charged. In other words, the electric energy storage system is a system capable of storing and supplying power in the house 89 with use of the power supply 91.

The power stored in the power supply 91 is arbitrarily usable. Therefore, for example, the power from the centralized power system 97 is allowed to be stored in the power supply 91 at midnight at which a power rate is low, and the power stored in the power supply 91 is allowed to be used in the daytime in which the power rate is high.

It is to be noted that the above-described electric energy storage system may be mounted per house (per household), or per a plurality of houses (a plurality of households).

### (3-4. Electric power tool)

FIG. 8 illustrates a block configuration of an electric power tool. For example, as illustrated in FIG. 8, the electric power tool is an electric drill, and includes a control section 99 and a power supply 100 in a tool body 98 formed of a plastic material or the like. A drill section 101 as a movable section is operably (rotatably) attached to the tool body 98.

The control section 99 controls operation of the entire electric power tool (including a usage state of the power supply 100), and includes, for example, a CPU. The power supply 100 includes one or two or more secondary batteries (not illustrated). The control section 99 allows the power supply 100 to supply power to the drill section 101 as necessary according to an operation of an operation switch (not illustrated), thereby bringing the drill section 101 into operation.

### [Examples]

Examples of the embodiment of the technology will be described in detail below.

### (Experimental Example 1-1 to 1-29)

First, two kinds of different-composition complex phosphate particles (iron-based particles and manganese-based particles) were prepared as cathode active materials by the following steps.

As the iron-based particles, LiFePO₄ was obtained by the following steps. First, 600 g of a mixture of lithium phosphate powder and iron (II) phosphate octahydrate powder was prepared to have a mole ratio of Li:Fe:P=1:1:1, and then the mixture was put into 4 dm³ (=4 L) of pure water, and the pure water was stirred to form material slurry. Next, 100 g of maltose was added to the material slurry, and then the material slurry was wet-milled in a bead mill to obtain pulverized slurry. Next, the pulverized slurry was dried in a vacuum to obtain precursor powder, and then the precursor powder was fired at 600°C for 3 hours in a N₂ atmosphere (in a N₂ concentration of 100%) to obtain LiFePO₄.

Moreover, steps similar to those of obtaining LiFePO₄ were performed to obtain LiFe_{0.9}Mn₀.₁)PO₄ or LiFe₀.₄Mn_{0.6}PO₄, except that a mixture of lithium phosphate powder, iron (II) phosphate octahydrate powder, and manganese (II) phosphate trihydrate powder was weighed to have a mole ratio of Li:Fe:Mn:P=1:0.9:0.1:1 or 1:0.4:0.6:1. Steps similar to those of obtaining LiFePO₄ were performed to obtain LiFe_{0.99}Co_{0.01}PO₄, except that a mixture of lithium phosphate powder, iron (II) phosphate octahydrate powder, and cobalt (II) phosphate octahydrate powder was weighed to have a mole ratio of Li:Fe:Co:P=1:0.99:0.01:1. Steps similar to those of obtaining LiFe_{0.99}C_{0.01})PO₄ were performed to obtain LiFe_{0.99}Mg_{0.01}PO₄ or LiFe_{0.99}Zn_{0.01}PO₄, except that, instead of cobalt (II) phosphate octahydrate, magnesium (II) phosphate octahydrate or zinc phosphate tetrahydrate was used. Steps similar to those of obtaining LiFePO₄ were performed to obtain LiFe_{0.99}Zr_{0.01}PO₄, except that a mixture of lithium phosphate powder, iron (II) phosphate octahydrate powder, zirconium acetate powder, and ammonium dihydrogen phosphate powder was weighed to have a mole ratio of Li:Fe:Zr:P=1:0.99:0.01:1. Steps similar to those of obtaining LiFePO₄ were performed to obtain LiFe_{0.995}Nb_{0.005}PO₄, except that a mixture of lithium phosphate powder, iron (II) phosphate octahydrate powder, niobium hydrogen oxalate powder, and ammonium dihydrogen phosphate powder was weighed to have a mole ratio of Li:Fe:Nb:P=1:0.995:0.005:1 as an element ratio.

Steps similar to those of obtaining the iron-based particles were performed to obtain LiMn_{0.75}Fe_{0.25}PO₄ as the manganese-based particles, except that a mixture of lithium phosphate powder, manganese (II) phosphate trihydrate powder, and iron (II) phosphate octahydrate powder was weighed to have a mole ratio of Li:Mn:Fe:P=1:0.75:0.25:1.

Moreover, steps similar to those of obtaining LiMn_{0.75}Fe₀.₂₅PO₄ were performed to obtain LiMn_{0.74}Fe₀.₂₅Co₀.₀₁PO₄, except that a mixture of lithium phosphate powder, manganese (II) phosphate trihydrate powder, iron (II) phosphate octahydrate powder, and cobalt (II) phosphate octahydrate powder was weighed to have a mole ratio of Li:Mn:Fe:Co:P=1:0.74:0.25:0.01:1. Steps similar to those of obtaining LiMn_{0.75}Fe_{0.25}PO₄ were performed to obtain Li₃V₂(PO₄)₃, except that a mixture of lithium carbonate powder, vanadium pentoxide powder, and ammonium hydrogen phosphate powder was weighed to have a mole ratio of Li:V:P=3:2:3.

When elemental analysis was performed on surfaces of the iron-based particles and the manganese-based particles by a scanning analytical electron microscope (SEM/EDX), it was confirmed that the surfaces of the iron-based particles and the manganese-based particles each were coated with a coating layer (a carbon material). After that, the iron-based particles and the manganese-based particles were mixed to have one of mixture ratios (weight ratios) illustrated in Tables 1 and 2, thereby preparing the cathode active material. In this case, if necessary, pulverized slurry containing particles of a same kind or particles of different kinds was dry-granulated with use of a spray drying method (at an intake temperature of 200°C) to form aggregates (secondary particles).

For comparison, as illustrated in Tables 1 and 2, LiCoO₂ and Li₁.₀₃Ni_{0.8}Co₀.₂O₂ with a bedded salt crystal structure, and LiMn₂O₄ and LiMn_{1.9}Mg_{0.1}O₄ with a spinel crystal structure were prepared as cathode active materials.

LiCoO₂ was obtained by the following steps. First, 600 g of a mixture of cobalt sulfate powder and lithium hydroxide monohydrate powder was prepared to have a mole ratio of Li:Co=1:1, and then the mixture was put into 4 dm³ of pure water, and the pure water was stirred to form material slurry. Next, 50 g of maltose was added to the material slurry, and then the material slurry was wet-milled in a bead mill to obtain pulverized slurry. Next, the pulverized slurry was dried in a vacuum to obtain precursor powder, and then the precursor powder was fired at 800°C for 4 hours in a N₂ atmosphere (in a N₂ concentration of 100%) to obtain LiCoO₂.

Li_{1.03}Ni_{0.8}Co_{0.2}O₂ was obtained by the following steps. First, 600 g of a mixture of cobalt sulfate powder, nickel sulfate powder, and lithium hydroxide monohydrate powder was prepared to have a mole ratio of Li:Ni:Co=1.03:0.8:0.2, and then the mixture was put into 4 dm³ of pure water, and the pure water was stirred to form material slurry. Next, 50 g of maltose was added to the material slurry, and then the material slurry was wet-milled in a bead mill to obtain pulverized slurry. Next, the pulverized slurry was dried in a vacuum to obtain precursor powder, and then the precursor powder was fired at 700°C for 8 hours in an O₂ atmosphere (in an O₂ concentration of 100%) to obtain Li_{1.03}Ni_{0.8}Co_{0.2}O₂.

LiMn₂O₄ was obtained by the following steps. First, 600 g of a mixture of manganese sulfate powder and lithium hydroxide monohydrate powder was prepared to have a mole ratio of Li:Mn=1:2, and then the mixture was put into 4 dm³ of pure water, and the pure water was stirred to form material slurry. Next, 50 g of maltose was added to the material slurry, and then the material slurry was wet-milled in a bead mill to obtain pulverized slurry. Next, the pulverized slurry was dried in a vacuum to obtain precursor powder, and then the precursor powder was fired at 750°C for 12 hours in a N₂ atmosphere (in a N₂ concentration of 100%) to obtain LiMn₂O₄.

Steps similar to those of obtaining LiMn₂O₄ were performed to obtain LiMn_{1.9}Mg_{0.1}O₄, except that a mixture of manganese sulfate powder, magnesium sulfate powder, and lithium hydroxide monohydrate powder were weighed to have a mole ratio of Li:Mn:Mg=1:1.9:0.1.

It is to be noted that crystallite sizes (nm) of the materials measured by an X-ray diffraction method were as illustrated in Tables 1 and 2.

Next, the cylindrical type lithium-ion secondary batteries illustrated in FIGs. 1 and 2 were formed by the following steps.

The cathode 21 was formed by the following steps. First, 90 parts by mass of the cathode active material, 4 parts by mass of the cathode binder (polyvinylidene fluoride: PVDF), and 6 parts by mass of the cathode conductor (amorphous carbon powder) were mixed to form a cathode mixture. Next, the cathode mixture was dispersed in the organic solvent (N-methyl-2-pyrrolidone: NMP) to form paste-form cathode mixture slurry. Then, the cathode mixture slurry was uniformly applied to both surfaces of the strip-like cathode current collector 2 1 A (aluminum foil with a thickness of 12 µm) by a coating unit, and the cathode mixture slurry was dried to form the cathode active material layer 21B. In this case, if necessary, a layer including the manganese-based particles was formed on a layer including the iron-based particles to form the multilayer cathode active material layer 21 B. In the case of the multilayer cathode active material layer 21B, the weight ratio of the iron-based particles and the manganese-based particles were similar to that in the case where the iron-based particles and the manganese-based particles were mixed (iron-based particles:manganese-based particles=50:50). Next, the cathode active material layer 21B was compression molded by a roller press.

Next, the anode 22 was formed by the following steps. First, 95 parts by mass of the anode active material (artificial graphite) and 5 parts by mass of the anode binder (PVDF) were mixed to form an anode mixture. Next, the anode mixture was dispersed in the organic solvent (NMP) to form paste-form anode mixture slurry. Then, the anode mixture slurry was uniformly applied to both surfaces of the strip-like anode current collector 22A (electrolytic copper foil) by a coating unit, and the anode mixture slurry was dried to form the anode active material layer 22B. Next, the anode active material layer 22B was compression molded by a roller press.

The electrolytic solution was prepared by dissolving the electrolyte salt (LiPF₆) in the solvent (ethylene carbonate (EC) and ethyl methyl carbonate (EMC)). In this case, as the composition of the solvent, the weight ratio of EC and EMC was EC:EMC=50:50, and the content of the electrolyte salt was 1 mol/dm³ relative to the solvent.

The secondary battery was assembled by the following steps. First, the cathode lead 25 made of aluminum was welded to the cathode current collector 21 A, and the anode lead 26 made of nickel was welded to the anode current collector 22A. Next, the cathode 21 and the anode 22 were laminated with the separator 23 (a microporous polypropylene film with a thickness of 25 µm) in between, and were spirally wound to form a spirally wound body, and then an outermost portion of the spirally wound body was fixed by an adhesive tape to form the spirally wound electrode body 20. Next, the center pin 24 was inserted into the center of the spirally wound electrode body 20. Then, the spirally wound electrode body 20 sandwiched between the pair of insulating plates 12 and 13 was contained in the battery can 11 made of nickel-plated iron. In this case, an end of the cathode lead 25 and an end of the anode lead 26 were welded to the safety valve mechanism 15 and the battery can 11, respectively. Next, the electrolytic solution was injected into the battery can 11 by a decompression method to impregnate the separator 23 with the electrolytic solution. Finally, the battery cover 14, the safety valve mechanism 15, and the PTC device 16 were caulked in an open end of the battery can 11 by the gasket 17. Thus, each of the cylindrical type secondary batteries (an outside diameter of 18 mm×a height of 65 mm) was completed. When this secondary battery was formed, the thickness of the cathode active material layer 21B was adjusted to prevent deposition of lithium metal on the anode 22 in a fully-charged state.

When battery capacity characteristics and cycle characteristics of the secondary batteries were determined, results illustrated in Tables 1 and 2 were obtained.

To determine the battery capacity characterstics, one cycle of charge and discharge was performed on each of the secondary batteries in a room temperature environment (at 23°C) to determine its initial capacity (mAh). As conditions of charge, a charge current was 2 A, a charge voltage was 4.2 V, and a charge time was 1 hour, and as a condition of discharge, a discharge current was 20 A.

To determine the cycle characteristics, one cycle of charge and discharge was performed on each of the secondary batteries in a room temperature environment (at 23°C) to determine its discharge capacity (mAh), and then the cycle of charge and discharge was repeated until the total cycle number reached 1000 cycles to determine the discharge capacity (mAh) of each of the secondary batteries. A capacity retention ratio (%)=(discharge capacity in the 1000th cycle/discharge capacity in the first cycle)×100 was determined from these results by calculation. The conditions of charge and discharge were similar to those in the case where the battery capacity characteristics were determined.

**[Table 1]**

| Experimental Example | Cathode Active Material | | | | Mixture Ratio (Weight Ratio) | Aggregates of Same Kind | Aggregates of Different Kinds | Laminated | Initial Capacity (mAh) | Capacity Retention Ratio (%) |
|---|---|---|---|---|---|---|---|---|---|---|
| | Composition | Crystallite Size (nm) | Composition | Crystallite Size (nm) | | | | | | |
| 1 | LiFePO₄ | 59 | LiMn_{0 75}Fe_{0 25}PO₄ | 40 | 50:50 | Not Included | Not Included | No | 1020 | 92 |
| 2 | LiFePO₄ | 62 | LiMn_{0 75}Fe_{0 25}PO₄ | 42 | 50:50 | Included | Not Included | No | 1025 | 95 |
| 3 | LiFePO₄ | 59 | LiMn_{0 75}Fe_{0 25}PO₄ | 40 | 50:50 | Not Included | Included | No | 1021 | 96 |
| 4 | LiFePO₄ | 59 | LiMn_{0 75}Fe_{0 25}PO₄ | 40 | 5.95 | Not Included | Not Included | No | 1004 | 83 |
| 5 | LiFePO₄ | 59 | LiMn_{0 75}Fe_{0 25}PO₄ | 40 | 20.80 | Not Included | Not Included | No | 1018 | 90 |
| 6 | LiFePO4 | 59 | LiMn_{0 75}Fe_{0 25}PO₄ | 40 | 80.20 | Not Included | Not Included | No | 1015 | 92 |
| 7 | LiFePO₄ | 59 | LiMn_{0 75}Fe_{0 25}PO₄ | 40 | 95.5 | Not Included | Not Included | No | 1014 | 90 |
| 8 | LiFe_{0 9}Mn_{0 1} PO₄ | 55 | LiMn_{0 74}Fe_{0 25}Co_{0 01}PO₄ | 36 | 50:50 | Not Included | Not Included | No | 1015 | 91 |
| 9 | LiFe_{0 99}Co_{0 01}PO₄ | 52 | LiMn_{0 75}Fe_{0 25}PO₄ | 40 | 50:50 | Not Included | Not Included | No | 1020 | 88 |
| 10 | LiFe_{0 99}Mg_{0 01}PO₄ | 54 | LiMn_{0 75}Fe_{0 25}PO₄ | 40 | 50:50 | Not Included | Not Included | No | 1011 | 90 |
| 11 | LiFe_{0 99}Zn_{0 01}PO₄ | 49 | LiMn_{0 75}Fe_{0 25}PO₄ | 40 | 50:50 | Not Included | Not Included | No | 1007 | 89 |
| 12 | LiFe_{0 99}Zr_{0 01}PO₄ | 47 | LiMn_{0 75}Feo₂₅PO₄ | 40 | 50.50 | Not Included | Not Included | No | 1014 | 81 |
| 13 | LiFePO₄ | 59 | Li₃V₂(PO₄)₃ | 51 | 50:50 | Not Included | Not Included | No | 1001 | 83 |
| 14 | LiFe_{0 4}Mn₀₆PO₄ | 48 | LiMn_{0 75}Fe_{0 25}PO₄ | 40 | 50:50 | Not Included | Not Included | No | 1005 | 92 |
| 15 | LiFe_{0 995}Nb0 005PO₄ | 56 | LiMn_{0 75}Fe_{0 25}PO₄ | 40 | 50:50 | Not Included | Not Included | No | 1013 | 80 |
| 16 | LiFePO₄ | 59 | LiMn_{0 75}Fe_{0 25}PO₄ | 40 | - | Not Included | Not Included | Yes | 1018 | 85 |

**[Table 2]**

| Experimental Example | Cathode Active Material | | | | Mixture Ratio (Weight Ratio) | Aggregates of Same Kind | Aggregates of Different Kinds | Laminated | Initial Capacity (mAh) | Capacity Retention Ratio (%) |
|---|---|---|---|---|---|---|---|---|---|---|
| | Composition | Crystallite Size (nm) | Composition | Crystallite Size (nm) | | | | | | |
| 17 | LiFePO₄ | 59 | - | - | - | Not Included | - | No | 955 | 61 |
| 18 | LiFePO₄ | 62 | - | - | - | Included | - | No | 921 | 68 |
| 19 | - | - | LiMn_{0 75}Feo₂₅PO₄ | 40 | - | Not Included | - | No | 972 | 50 |
| 20 | - | - | LiMn_{0 75}Fe_{0 25}PO₄ | 42 | - | Included | - | No | 844 | 53 |
| 21 | LiFe_{0 6}Mn_{0 4}PO₄ | 50 | - | - | - | Not Included | - | No | 960 | 59 |
| 22 | LiCoO₂ | 82 | LiMn_{0 75}Fe_{0 25}PO₄ | 40 | 50:50 | Not Included | Not Included | No | 1003 | 55 |
| 23 | LiCoO₂ | 82 | Li_{1 03}Ni_{0 8}Co_{0 2}O₂ | 77 | 50:50 | Not Included | Not Included | No | 993 | 49 |
| 24 | LiCoO₂ | 82 | - | - | - | Not Included | - | No | 1010 | 57 |
| 25 | - | - | LiMn_{0 75}Fe_{0 25}PO₄ | 40 | - | Not Included | - | No | 1015 | 51 |
| 26 | LiMn₂O₄ | 55 | LiMn_{0 75}Fe_{0 25}PO₄ | 40 | 50:50 | Not Included | Not Included | No | 953 | 55 |
| 27 | LiMn₂O₄ | 55 | LiMn_{1 9}Fe_{0 1}PO₄ | 36 | 50:50 | Not Included | Not Included | No | 923 | 45 |
| 28 | LiMn₂O₄ | 55 | - | - | - | Not Included | - | No | 920 | 41 |
| 29 | - | - | LiMn_{1 9}Mg_{0 1}O₄ | 36 | - | Not Included | - | No | 852 | 46 |

In the case where two kinds of different-composition complex phosphate particles with an olivine crystal structure were used as the cathode active materials, compared to the case where two other kinds of particles were used, the initial capacity and the capacity retention ratio were greatly increased.

More specifically, in results obtained in the case where only the iron-based particles or the manganese-based particles were used (Experimental Examples 1-17 to 1-21), unlike the case where a combination of the iron-based particles and the manganese-based particles was used, a tendency of noticeably improving the initial capacity and the capacity retention ratio was not found. However, when a combination of the iron-based particles and the manganese-based particles was used (Experimental Examples 1-1 to 1-16), the initial capacity and the capacity retention ratio were both remarkably increased. This result indicates that when two kinds of different-composition complex phosphate particles were used, a specific advantage, that is, a remarkable increase in initial efficiency and the capacity retention ratio by a synergistic interaction between them is obtainable.

In particular, in the case where the iron-based particles and the manganese-based particles were used, when particles of a same kind or different kinds form aggregates (secondary particles), the initial capacity and the capacity retention ratio were further increased. Thus, a tendency of further increasing the initial capacity and the capacity retention ratio was obtained in a like manner when the mixture ratio (the weight ratio) of the iron-based particles and the manganese-based particles was within a range of 20:80 to 95:5 both inclusive, or when the crystallite size of the iron-based particles was larger than that of the manganese-based particles.

Moreover, in the case where the iron-based particles and the manganese-based particles were used, high initial capacity and a high capacity retention ratio were obtained not only when the iron-based particles and the manganese-based particles were both included in a same layer, but also when the iron-based particles and the manganese-based particles were included in different layers, respectively. However, when the iron-based particles and the manganese-based particles were both included in the same layer, the initial capacity and the capacity retention ratio were further increased.

It is to be noted that, when other kinds of particles were combined instead of two kinds of different-composition complex phosphate particles with an olivine crystal structure, sufficient initial capacity and a sufficient capacity retention ratio were not obtained.

More specifically, when LiCoO₂ or the like with a bedded salt crystal structure, or LiMn₂O₄ or the like with a spinel crystal structure was singly used, or was combined with LiMn_{0.75}Fe_{0.25}PO₄ with an olivine crystal structure, the initial capacity and the capacity retention ratio was much lower than those in the case where two kinds of different-composition complex phosphate particles with an olivine crystal structure were used. It is obvious from this result that a remarkable increase in the initial capacity and the capacity retention ratio is a specific advantage obtained only in the case where two kinds of different-composition complex phosphate particles are used.

It was confirmed from the results in Tables 1 and 2 that when the cathode active material included two kinds of different-composition complex phosphate particles, good battery characteristics were obtained.

Although the present technology is described referring to the embodiment and the examples, the technology is not limited thereto, and may be variously modified. For example, the active material or the electrode according to the technology is applicable, in a like manner, to a secondary battery in which the capacity of an anode includes a capacity by insertion and extraction of lithium ions and a capacity associated with deposition and dissolution of lithium metal, and is represented by the sum of them. In this case, a chargeable capacity of the anode material is set to be smaller than the discharge capacity of a cathode.

Moreover, in the embodiment and the examples, the case where the battery configuration is the cylindrical type or the laminate film type, and the case where the battery device has a spirally wound configuration are described as examples; however, the technology is not limited thereto. The secondary battery according to the technology is also applicable, in a like manner, to the case where the secondary battery has any other battery configuration such as a prismatic type, a coin type, or a button type, or the case where the battery device has any other configuration such as a laminate configuration.

It is to be noted that the technology is allowed to have the following configurations.
(1) A secondary battery including:
   a cathode;
   an anode; and
   an electrolytic solution,
   in which the cathode includes two or more kinds of lithium transition metal complex phosphate particles including lithium and one or two or more transition metals as constituent elements, and
   the composition of the one or two or more transition metals differs between the two or more kinds of lithium transition metal complex phosphate particles.
(2) The secondary battery according (1), in which
   the one or two or more transition metals are one or more kinds selected from the group consisting of Fe, Mn, Ni, Co, Mg, Ti, Al, Zn, Cu, V, Zr, Mo, and Nb.
(3) The secondary battery according to (1) or (2), in which
   the two or more kinds of lithium transition metal complex phosphate particles each have an olivine crystal structure.
(4) The secondary battery according to any one of (1) to (3), in which
   the two or more kinds of lithium transition metal complex phosphate particles include iron-based particles represented by a formula (1) and manganese-based particles represented by a formula (2):

   LiₐFe_{1-b}M1_{b}(PO₄)_{c} (1)

   Li_{d}Mn₁₋ₑM2ₑ(PO₄)_{f} (2)

   where M1 is one or more kinds selected from the group consisting of Mn, Ni, Co, Mg, Ti, Al, Zn, Cu, V, Zr, Mo, and Nb, a, b, and c satisfy 0≤a<2, 0≤b<0.8, and 0≤c<2, respectively, M2 is one or more kinds selected from the group consisting of Fe, Ni, Co, Mg, Ti, Al, Zn, Cu, V, Zr, Mo, and Nb, d, e, and f satisfy 0≤d<2, 0≤e≤1, and 0≤f<2, respectively, and when M1 is Mn and M2 is Fe, (1-b)>b and (1-e)>e are established.
(5) The secondary battery according to (4), in which
   a crystallite size of the iron-based particles obtained by X-ray diffraction is larger than that of the manganese-based particles.
(6) The secondary battery according to (4) or (5), in which
   a mixture ratio of the iron-based particles to the manganese-based particles is within a range of approximately 20:80 to 95:5 both inclusive in weight ratio.
(7) The secondary battery according to any one of (4) to (6), in which
   particles of a same kind are aggregated in either or both of the iron-based particles and the manganese-based particles.
(8) The secondary battery according to any one of (4) to (6), in which
   particles of different kinds are aggregated in the iron-based particles and the manganese-based particles.
(9) The secondary battery according to any one of (4) to (8), in which
   a coating layer including a carbon material is provided on surfaces of either or both of the iron-based particles and the manganese-based particles.
(10) The secondary battery according to any one of (4) to (9), in which
   the cathode includes a cathode active material layer, and the cathode active material layer has a configuration in which a layer including the iron-based particles and a layer including the manganese-based particles are laminated.
(11) The secondary battery according to any one of (1) to (10), in which
   the secondary battery is a lithium-ion secondary battery.
(12) An electrode including two or more kinds of lithium transition metal complex phosphate particles which include lithium and one or two or more transition metals as constituent elements,
   in which the composition of the one or two or more transition metals differs between the two or more kinds of lithium transition metal complex phosphate particles.
(13) An active material including two or more kinds of lithium transition metal complex phosphate particles which include lithium and one or two or more transition metals as constituent elements,
   in which the composition of the one or two or more transition metals differs between the two or more kinds of lithium transition metal complex phosphate particles.
(14) A battery pack including:
   the secondary battery according to any one of (1) to (11);
   a control section controlling a usage state of the secondary battery; and
   a switch section switching the usage state of the secondary battery according to an instruction from the control section.
(15) An electric vehicle including:
   the secondary battery according to any one of (1) to (11);
   a conversion section converting electric power supplied from the secondary battery into driving force;
   a drive section operating according to the driving force; and
   a control section controlling a usage state of the secondary battery.
(16) An electric energy storage system including:
   the secondary battery according to any one of (1) to (11);
   one or two or more electrical units; and
   a control section controlling electric power supply from the secondary battery to the electrical unit.
(17) An electric power tool including:
   the secondary battery according to any one of (1) to (11); and
   a movable section receiving electric power from the secondary battery.
(18) An electronic unit receiving electric power from the secondary battery according to any one of (1) to (11).

The present application contains subject matter related to that disclosed in Japanese Priority Patent Application 2011-186116 filed in the Japan Patent Office on August 29, 2011, the entire content of which is hereby incorporated by reference.

It should be understood by those skilled in the art that various modifications, combinations, sub-combinations, and alterations may occur depending on design requirements and other factors insofar as they are within the scope of the appended claims or the equivalents thereof.

## Claims

1. A secondary battery comprising:
a cathode;
an anode; and
an electrolytic solution,
wherein the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.

2. The secondary battery according to claim 1, wherein
the one or two or more transition metals are one or more kinds selected from the group consisting of Fe, Mn, Ni, Co, Mg, Ti, Al, Zn, Cu, V, Zr, Mo, and Nb.

3. The secondary battery according to anyone of claims 1 or 2, wherein
the two or more kinds of lithium transition metal complex phosphate particles each have an olivine crystal structure.

4. The secondary battery according to anyone of claims 1 to 3, wherein
the two or more kinds of lithium transition metal complex phosphate particles include iron-based particles represented by a formula (1) and manganese-based particles represented by a formula (2):
LiₐFe_{1-b}M1_{b}(PO₄)_{c} (1)
Li_{d}Mn₁₋ₑM2ₑ(PO₄)_{f} (2)
where M1 is one or more kinds selected from the group consisting of Mn, Ni, Co, Mg, Ti, Al, Zn, Cu, V, Zr, Mo, and Nb, a, b, and c satisfy 0≤a<2, 0≤b<0.8, and 0≤c<2, respectively, M2 is one or more kinds selected from the group consisting of Fe, Ni, Co, Mg, Ti, Al, Zn, Cu, V, Zr, Mo, and Nb, d, e, and f satisfy 0≤d<2, 0≤e≤1, and 0≤f<2, respectively, and when M1 is Mn and M2 is Fe, (1-b)>b and (1-e)>e are established.

5. The secondary battery according to claim 4, wherein
a crystallite size of the iron-based particles obtained by X-ray diffraction is larger than that of the manganese-based particles in weight ratio.

6. The secondary battery according to anyone of claims 4 or 5, wherein
a mixture ratio of the iron-based particles to the manganese-based particles is within a range of approximately 20:80 to 95:5 both inclusive in weight ratio.

7. The secondary battery according to anyone of claims 4 to 6, wherein
particles of a same kind are aggregated in either or both of the iron-based particles and the manganese-based particles.

8. The secondary battery according to anyone of claims 4 to 7, wherein
particles of different kinds are aggregated in the iron-based particles and the manganese-based particles.

9. The secondary battery according to anyone of claims 4 to 8, wherein
a coating layer including a carbon material is provided on surfaces of either or both of the iron-based particles and the manganese-based particles.

10. The secondary battery according to anyone of claims 4 to 9, wherein
the cathode includes a cathode active material layer, and the cathode active material layer has a configuration in which a layer including the iron-based particles and a layer including the manganese-based particles are laminated.

11. The secondary battery according to anyone of claims 1 to 10, wherein
the secondary battery is a lithium-ion secondary battery.

12. An electrode comprising two or more kinds of lithium transition metal complex phosphate particles which include lithium and one or two or more transition metals as constituent elements,
wherein the composition of the one or two or more transition metals differs between the two or more kinds of lithium transition metal complex phosphate particles.

13. An active material comprising two or more kinds of lithium transition metal complex phosphate particles which include lithium and one or two or more transition metals as constituent elements,
wherein the composition of the one or two or more transition metals differs between the two or more kinds of lithium transition metal complex phosphate particles.

14. A battery pack comprising:
a secondary battery;
a control section controlling a usage state of the secondary battery; and
a switch section switching the usage state of the secondary battery according to an instruction from the control section,
wherein the secondary battery includes a cathode, an anode, and an electrolytic solution,
the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.

15. An electric vehicle comprising:
a secondary battery;
a conversion section converting electric power supplied from the secondary battery into driving force;
a drive section operating according to the driving force; and
a control section controlling a usage state of the secondary battery,
wherein the secondary battery includes a cathode, an anode, and an electrolytic solution,
the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.

16. An electric energy storage system comprising:
a secondary battery;
one or two or more electrical units; and
a control section controlling electric power supply from the secondary battery to the electrical unit,
wherein the secondary battery includes a cathode, an anode, and an electrolytic solution,
the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.

17. An electric power tool comprising:
a secondary battery; and
a movable section receiving electric power from the secondary battery,
wherein the secondary battery includes a cathode, an anode, and an electrolytic solution,
the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.

18. An electronic unit receiving electric power from a secondary battery, the secondary battery comprising:
a cathode;
an anode; and
an electrolytic solution,
wherein the cathode includes two or more kinds of lithium transition metal complex phosphate particles including lithium and one or two or more transition metals as constituent elements, and
the composition of the one or two or more transition metals differs between the two or more kinds of lithium transition metal complex phosphate particles.
